# EUROPÄISCHE PATENTANMELDUNG

(11) **EP 2 026 440 A2**
(43) Veröffentlichungstag der Anmeldung: **18.02.2009**
(21) Anmeldenummer: 08014410.8
(22) Anmeldetag: 13.08.2008
(51) Int. Cl.: H02J 3/14

(54) **Verfahren und Vorrichtung zur Bereitstellung von Regelleistung im Energieversorgungsbereich eines Energieversorgers zur Frequenzstabilisierung eines elektrischen Netzes**

(30) Priorität: 14.08.2007 DE 102007038296; 19.05.2008 DE 102008024222
(71) Anmelder: Karl-Friedrich Schilling Elektrotechnik gmbH, 68309 Mannheim (DE)
(72) Erfinder: Giray, Ceyhun, 67063 Ludwigshafen (DE); Schermann, Dietolf, 85375 Neufahrn (DE); Hüsgen, Klaus-Wilhelm, 68167 Mannheim (DE)
(74) Vertreter: Mierswa, Klaus

(57) **Zusammenfassung**

Die Erfindung betrifft ein Verfahren und eine Vorrichtung zur Frequenzstabilisierung in einem elektrischen Netz. Die Regelleistung, die zur Frequenzstabilität im elektrischen Netz sorgt, benötigt schnell reagierende Leistungsreserven. Mit der steigenden Einspeisung von Strom aus fluktuierenden, regenerativen Energiequellen steigt der Bedarf an Regelleistung, die derzeit nur durch schnell regelbare Kraftwerke erbracht wird. Die Erfindung verfolgt die Idee, die Energiespeicher der USV-Anlagen für die Vorhaltung von Regelleistung zu nutzen. Es werden die unterschiedlichen Energiespeichersysteme und USV-Anlagen zur Erbringung von Regelleistung diskutiert. Energiespeichersysteme müssen abhängig der speziellen Anforderungen der Regelleistung gewählt werden. USV-Anlagen sind für diesen Einsatzbereich nicht vorgesehen und müssen entsprechend erfindungsgemäß erweitert werden. Eine Einschränkung der eigentlichen Funktion der USV-Anlagen ist damit nicht verbunden.

## Beschreibung

Die Erfindung betrifft ein Verfahren zur Bereitstellung von Regelleistung im Energieversorgungsbereich eines Energieversorgers zur Frequenzstabilisierung eines elektrischen Übertragungsnetzes (ÜN), in welchem sich wenigstens eine unterbrechungsfreie Stromversorgungsanlage, USV-Anlage, und/oder wenigstens ein Gleichrichtersystem zur unterbrechungsfreien Gleichstromversorgung, GR-System, sowie jeweils eine Eigenenergiequelle, wie Batterieanlage, der USV-Anlage und/oder des GR-Systems zur Notversorgung bei Ausfall des Übertragungsnetzes wenigstens einer an die USV-Anlage oder an das GR-System angeschlossenen elektrischen Last befindet, welche ein Drehstrom- und/oder ein Wechselstrom- und/oder ein Gleichstromverbraucher sein kann, eines die USV-Anlage und/oder das GR-System betreibenden Netzverbrauchers, der an das elektrische Übertragungsnetz angeschlossen ist, gemäß dem Oberbegriff des Anspruchs 1. Ebenso betrifft die Erfindung eine Vorrichtung zur Durchführung des Verfahrens gemäß dem Oberbegriff des Anspruchs 6.

### Stand der Technik:

Die Regelleistung, Reserveleistung, die zur Frequenzstabilität in einem elektrischen Netz sorgt, benötigt schnell reagierende Leistungsreserven. Mit der steigenden Einspeisung von Strom aus fluktuierenden, regenerativen Energiequellen steigt der Bedarf an Regelleistung, die derzeit nur durch schnell regelbare Kraftwerken erbracht wird. Der Stromverbrauch ändert sich ständig, weist aber ein zyklisches Verhalten auf. Durch diese Antikorrelation von Stromerzeugung und der Nachfrage steigen die Spannungs- und Frequenzschwankungen im elektrischen Netz. Auch die Dezentralisierung der Energieversorgung durch das Ersetzen großer Kraftwerksblöcke durch kleine ökologische Kraftwerke erhöht die Anforderungen an das Übertragungsnetz.

Die Zunahme der verteilten Stromerzeugung auf der Basis von verschiedenen dezentralen Stromerzeugungsanlagen, wie beispielsweise Windkraftanlagen, führt durch die unregelmäßigen Einspeisungen zur Reduzierung der Spannungsqualität. Die Übertragungsnetzbetreiber, ÜNB, die für die sichere und zuverlässige Stromversorgung verantwortlich sind, müssen für die Ausregelung der Leistungsunterschiede Regelleistungen vorhalten. Zur Zeit sind in Deutschland vier ÜNB (EON, Vattenfall Europe, RWE, ENBW) vertreten, die jeweils für die Spannungsqualität ihrer Regelzone zuständig sind. Für die Einhaltung der vorgegeben Spannungsqualität wird seitens der Übertragungsnetzbetreiber die Wartung, Instandhaltung und die Erweiterung der Übertragungsnetze übernommen. Diese Anforderungen stehen in der Richtlinie EN50160, die sicherstellen soll, dass die Netzverbraucher fehlerfrei betrieben werden können. Mit sinkender Spannungsqualität steigen jedoch die Kosten für den Regellaufwand der Reservepflichthaltung, die an die Netzverbraucher, Energie verbrauchende Unternehmen, weiter gegeben werden. Die Bereitstellung von Regelleistung erfolgt heute hauptsächlich durch gedrosselte Dampfkraftwerke. Diese Betriebsweise führt zu Mehrkosten bei der Erstellung elektrischer Energie.

Reserveleistung wird je nach Bereitstellungszeit in Primär-, Sekundär- und Minutenreserve aufgeteilt. Primärregelreserve muss innerhalb weniger Sekunden bis 30 Sekunden vollständig für bis zu 15 Minuten zur Verfügung stehen. Zur Zeit wird die Regelleistung durch thermische Erzeugungseinheiten wie Dampfkraftwerke mittels Drosselung der Kraftwerksleistung erreicht. Eine Vorhaltung von 5% der Kraftwerksleistung für Primärregelreserve ist damit erreichbar. Diese Betriebsweise führt einerseits zu Wirkungsgradeinbußungen, anderseits können die Kraftwerke nicht in Volllast gefahren werden, wie die reservierte Leistung nicht am Strommarkt angeboten werden kann. Durch diese Antikorrelation von Stromerzeugung und Nachfrage durch Netzverbraucher steigen die Spannungs- und Frequenzschwankungen im Netz. All dies führt zu Mehrkosten bei der Erstellung elektrischer Energie.

### Regelleistung im Übertragungsnetz:

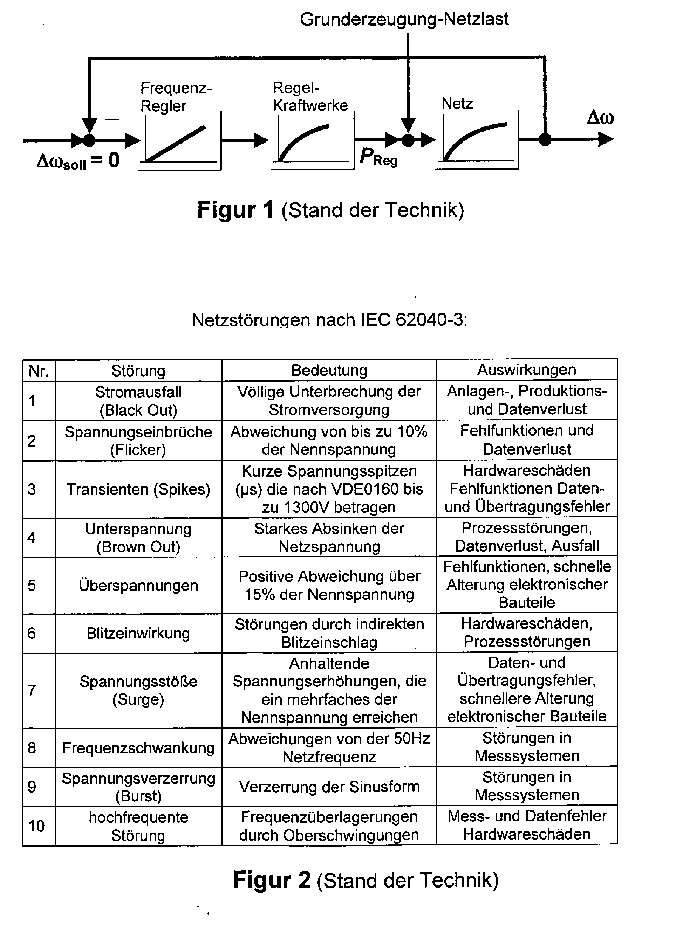

Für die Netzfrequenzhaltung des elektrischen Verbundnetzes müssen Reserveleistungen, sogenannte Regelleistungen, bereitgestellt werden, die notwendig sind, um die Netzfrequenz stabil zu halten. Frequenzabweichungen entstehen durch den Unterschied zwischen dem Strombedarf und der Stromerzeugung. Unvorhergesehene Abweichungen können durch Verbraucher (beispielsweise Ein- bzw. Ausschalten großer Lasten oder große Veranstaltungen) oder seitens der Leistungserbringer (beispielsweise Kraftwerksausfälle, Extraprognosen oder Windstille bei Windenergieanlagen) entstehen. Da ÜNB selbst kein oder nur geringfügig Strom erzeugen, muss der Ausgleich durch schnelle Regelleistungen erreicht werden. Die Menge an Regelleistung wird über die Leistungsbilanz ermittelt und, wie in Figur 1 dargestellt, über die Frequenzregelung geregelt.

Die Regeldifferenz wird über die Differenz des Sollwerts, das ist die Führungsgröße, von 50 Hz und der tatsächlichen Frequenz, die Regelgröße, durch eine negative Rückkopplung gebildet und an den Frequenzregler übermittelt. Der Frequenzregler stellt die entsprechende Regelleistung über die Regelkraftwerke ein, um die gewünschte Frequenz zu erhalten. Sowohl Einflüsse des Übertragungsnetzes (Strecke) als auch die Differenz aus Grunderzeugung und Netzlast (Störgröße) bewirken eine Veränderung der Regelgröße.

Die Regelleistung wird in drei Stufen eingeteilt. Dabei sind die Qualität und der Preis der Regelleistung abhängig von der Zeit bis zur Bereitstellung; je nach Qualität sind sie in Primärregelleistung, Sekundärregelleistung und Minutenreserveleistung unterteilt. Ab einer Stunde ist der entsprechende Bilanzkreisverwalter (BKV) für die Ausregelung der Leistungsbilanzabweichung zuständig.

Der Bedarf an Regelleistung ist abhängig von der Anzahl der Energieerzeuger und der Verbraucher, die an das Netz angeschlossen sind. Durch ein stark vermaschtes Netz sind Last und Erzeugerschwankungen leichter zu regeln, da sie sich zum Teil selbst ausgleichen. Derzeit liegt der Wert des gesamten Regelleistungsbedarfs bei 7.500 MW als positive und 5.500 MW negative Leistung. Bei positiver Regelleistung handelt es sich um Leistung, die bei Leistungsmangel ins Netz gespeist wird und bei negativer Regelleistung um die überschüssige Leistung, die vom Netz entnommen werden muss.

Primärregelleistung:

Die Primärregelleistung ist zuständig für die augenblickliche Stabilisierung der Netzfrequenz eines Gebiets bei Energienungleichgewichten. Aktiviert wird sie bei einer Frequenzabweichung von +/- 200mHz. Außerdem ist damit der Ausgleich von Kraftwerksausfällen zu sichern. Die Primärregelleistung ist innerhalb weniger Sekunden bis 30 Sekunden gleichmäßig zu erhöhen, bis die gesamte angebotene Leistung zur Verfügung steht. Diese Leistung kann bis zu 15 Minuten abgegeben werden und wird anschließend vollständig durch die Minutenreserve abgelöst. Damit bei Frequenzschwankungen innerhalb Sekunden eingegriffen werden kann, wird die Frequenzregelung Vorort erfüllt. Für die Bereitstellung der technischen Einheiten zur Leistungsfrequenzregelung ist der entsprechende Erbringer der Regelleistung zuständig. Sowohl die Statusinformation, ob die technischen Einheiten aktiv sind, als auch die Ist-Leistung der Erzeugereinheit ist seitens der Erbringer als Online-Information bereitzustellen.

### Sekundärregelleistung:

Die eigentliche Aufgabe der Sekundärregelleistung ist der permanente Ausgleich von Stromerzeugung und Strombedarf in der jeweiligen Regelzone. Bei großen Frequenzabweichungen, wie bei Kraftwerksausfällen, wird die Primärregelleistung bei der Aufrechterhaltung der Nennfrequenz unterstützt. Die Aktivierung der Leistung ist bis zu einer maximalen Totzeit von 30 Sekunden zulässig, wobei das Erreichen der vollen Leistung bis zu fünf Minuten dauern darf. Je nach Energiespeicher oder Anlage können bis zu 60 Minuten abgedeckt werden. Die maximale Totzeit von 30 Sekunden erlaubt eine Aktivierung der technischen Erzeugereinheit über eine zentrale Steuerungsstelle (ZST), die vom jeweiligen ÜNB betrieben wird. Dieser Leistungsfrequenzregler ermittelt die Leistungsanforderung (Sollwert) und leitet sie mittels einer redundanten Fernwirkverbindung an die einzelnen Erzeugereinheiten weiter. Für die Kommunikationseinheit und die informationstechnische Anbindung mit einer Messwerterneuerungszeit von weniger als einer Sekunde, ist der Anbieter der Regelleistung zuständig.

Minutenreserveleistung:

Für den temporären Ausgleich der Frequenzabweichungen innerhalb der Regelzonen und zur Unterstützung der Sekundärregelleistung ist die Minutenreserveleistung zuständig. Die zur erbringende Leistung muss in voller Höhe innerhalb von 15 Minuten bereit sein. Der gesamte abzudeckende Zeitraum kann je nach Störung mehrere Stunden betragen. Bei einer täglichen Ausschreibung ist der durchschnittliche Bedarf an Regelleistung schwer einzuschätzen. Laut dem Verband der Netzbetreiber (VDN) liegt der Bedarf an Minutenreserveleistung über 3000 MW.

Für die Minutenreserve ist eine automatische Frequenzregelung nicht erforderlich. Bei Bedarf an Minutenreserveleistung werden die entsprechenden Anbieter für die Bereitstellung telefonisch benachrichtigt. Wie auch bei der Primärregelleistung ist sowohl die Statusinformation, ob die technischen Einheiten aktiv sind, als auch die Ist-Leistung der Erzeugereinheit seitens der Anbieter als Online-Information bereitzustellen.

Die Bereitstellung von schnell aktivierbaren Regelreserveleistungen erfolgt üblicherweise durch thermische Erzeugungseinheiten, wie Dampfkraftwerke, mittels Drosselung der Kraftwerksleistung. Eine Vorhaltung von 5% der Kraftwerksleistung für Primärregelreserve ist damit erreichbar. Diese Betriebsweisen führen einerseits zu Wirkungsradeinbußungen, anderseits können die Kraftwerke nicht in Volllast gefahren werden. Beides führt zu Mehrkosten bei der Herstellung elektrischer Energie.

### Zweck der Erfindung:

Zweck der Erfindung ist die Bereitstellung von Regelleistung. Die Bereitstellung von Regelleistung wird in naher Zukunft allein durch Kraftwerke nicht mehr ausreichen. Auch die Kosten durch die Drosselung von Kraftwerken für die Vorhaltung von Reserveleistungen steigen proportional mit den Energieerzeugungskosten, die zum größten Teil abhängig von fossilen Brennstoffen sind. Der Einsatz von Energiespeichern kann diese Reservehaltung von Kraftwerken ersetzen, wobei sie entsprechende Anforderungen erfüllen müssen. Mit Energiespeichersystemen lassen sich nicht nur Reserveleistungen bereitstellen, sondern es bieten sich auch weitere Einsatzmöglichkeiten im Übertragungsnetz an. Mit einer optimalen Auslegung ist es sogar möglich verschiedene Einsatzbereiche gleichzeitig abzudecken.

### Technische Aufgabe:

Der Erfindung liegt die Aufgabe zugrunde, ein Verfahren und eine Vorrichtung zur Bereitstellung von Regelleistung zu schaffen, welche eine Frequenzhaltung (Frequenzstabilität) und daneben auch Verbesserung der Spannungsqualität im Energieversorgungsbereich bewirken sollen und mit welchen Kosten gesenkt, Kraftwerke entlastet und insbesondere auch die CO₂-Bilanz verbessert werden sollen.

### Offenbarung der Erfindung sowie deren Vorteile:

Die Lösung der Aufgabe besteht bei einem Verfahren der eingangs genannten Gattung darin, dass die wenigstens eine unterbrechungsfreie Stromversorgungsanlage, USV-Anlage, und/oder das wenigstens eine Gleichrichtersystem, GR-System, mit einem Steuergerät verbunden ist, und entweder bei der Nachfrage von positiver Regelleistung im Übertragungsnetz die oder mehrere der unterbrechungsfreien Stromversorgungsanlagen und/oder das oder mehrere der Gleichrichtersysteme durch das jeweilige Steuergerät vom Übertragungsnetz getrennt werden, und die Eigenenergiequelle, wie Batterieanlage, der USV-Anlage und/oder des GR-Systems, Eigenenergie als Regelleistung in das Übertragungsnetz (ÜN) einspeist, wobei die Last nur über die unterbrechungsfreie Stromversorgung der USV-Anlage und/oder des GR-Systems aus deren Eigenenergiequelle weiter versorgt wird, oder bei der Nachfrage von negativer Regelleistung mittels des Steuergerätes eine oder mehrere variable Lasten, Lastbänke, zugeschaltet werden (Lastabwurf-Verfahren), so dass ein höherer Energieverbrauch als vor dem Lastabwurf im Übertragungsnetz (ÜN) stattfindet.

Die Erfindung besitzt eine Reihe von hervorstechenden Vorteilen. Durch den Einsatz von Energiespeichern zur Verfügungstellung von Regelleistung im Übertragungsnetz wird insbesondere eine Verbesserung der Netzauslastung und der Netzqualität, Verbesserung der Frequenz hin zum Sollwert sowie Spannungsstabilität, eine Verbesserung der Regelgeschwindigkeit und dadurch Verminderung der Regelleistung, eine Verbesserung der Wirkungsgrade von Kraftwerken durch Volllastbetrieb, eine Gewinnerzielung durch die Ausnutzung von bereits vorhandenen Energiespeicherpotenzialen, eine Verbesserung der wirtschaftlichen Ausnutzung von dezentralen, baulichen und verteilungsmäßigen Voraussetzungen, eine Kostensenkung von Energiespeichersystemen durch Nutzung verschiedener Einsatzgebiete gleichzeitig sowie eine Verringerung des Ausstoßes von Treibhausgasen durch Entlastung von Kraftwerken erreicht. Insbesondere wird durch das erfindungsgemäße Verfahren sowie die erfindungsgemäße Vorrichtung erreicht, dass in vorteilhafter Weise im Energieversorgungsbereich eine Frequenzhaltung und Verbesserung der Spannungsqualität bewirkt wird, die Kosten gesenkt werden und Kraftwerke entlastet werden können, wie auch die CO₂-Bilanz verbessert der Kraftwerke verbessert wird.

Die Nutzung der bestehenden USV-Anlagen, der GR-Systeme und deren Batteriesysteme, die im Eigentum von Netzverbrauchern stehen, durch die Betreiber der Übertragungsnetze für die Bereitstellung von Regelleistung allein durch eine Batterieerweiterung innerhalb der USV-Anlagen sowie der GR-Systeme und eines Steuergerätes ermöglicht vorteilhaft jährliche Einnahmen des Betreibers der USV-Anlagen bzw. der GR-Systeme, ohne die eigentliche Funktion der USV-Anlagen bzw. der GR-Systeme zu beschränken oder zu stören. Die speziell errichteten Batterieräume der USV-Anlagen bzw., der GR-Systeme sind meist überdimensioniert. Mit der Vorhaltung von Regelleistung können diese Räume ohne weitere Umbaukosten für weitere Batterieanlagen genutzt werden. Ebenso können Firmen, die bisher auf USV-Anlagen oder auf GR-Systeme aus Kostengründen verzichtet haben, mit den Einnahmen aus der Vorhaltung von Regelleistung die USV-Anlagen bzw. die GR-Systeme finanzieren.

Nicht nur wirtschaftliche Vorteile sind durch diese Lösung zu erreichen sondern auch Vorteile für die Umwelt. Mit der Vorhaltung der Regelleistung durch USV-Anlagen müssen weniger Kraftwerke gedrosselt fahren. Damit können sie unter Volllast mit einem besseren Wirkungsgrad gefahren werden. Außerdem reduziert die schnelle Erbringung von Regelleistung durch Batterieanlagen im Gegensatz zu Kraftwerken den Bedarf an Regelleistung. Beides führt zu einer Senkung des CO₂-Ausstoßes und zur Kostensenkung.

In vorteilhafter Ausgestaltung der Erfindung weist das Übertragungsnetz des Energieversorgers eine Netzzentrale auf, welche mit dem jeweiligen Steuergerät der USV-Anlage und/oder des GR-Systems verbunden ist, wobei die USV-Anlage und/oder das GR-System über die Netzzentrale aktiviert und deaktiviert werden kann, und bei Nachfrage von Regelleistung die Netzzentrale das Steuergerät aktiviert, welches bei Nachfrage von positiver Regelleistung entweder die Trennung der USV-Anlage und/oder des GR-Systems vom Übertragungsnetz aktiviert oder bei Nachfrage von negativer Regelleistung die variable Last zuschaltet.

In weiterer erfindungsgemäßer Ausgestaltung überwacht das jeweilige, mit der

USV-Anlage und/oder dem GR-System verbundene Steuergerät selbsttätig die Frequenz des Netzes und aktiviert bei vorgegebener maximaler positiver oder maximaler negativer Abweichung der Frequenz, was aufgrund der Vorgaben der ÜNB an die beteiligten Netzverbraucher Nachfrage von Regelleistung bedeutet, automatisch die USV-Anlage und/oder das GR-System aktiviert und leitet somit automatisch die Abgabe von Regelleistung ein.

In weiterer Ausgestaltung des erfindungsgemäßen Verfahrens, unter Verwendung von zwei parallel geschalteten USV-Anlagen mit einem Lastumschaltmodul, der mit der Last verbunden ist, dient eine der beiden USV-Anlagen ständig über das Lastumschaltmodul zur Versorgung der Last und nur die andere der beiden USV-Anlagen wird zur Lieferung von Regelleistung herangezogen, indem diese USV-Anlage vom Übertragungsnetz abgeschaltet und die Eigenenergie der Eigenenergiequelle der USV-Anlage über einen Gleichstrom/Wechselstrom-Umrichter als Regelenergie dem Übertragungsnetz eingespeist wird.

Eine Vorrichtung zur Bereitstellung von Regelleistung im Energieversorgungsbereich eines Energieversorgers zur Frequenzstabilisierung eines elektrischen Übertragungsnetzes, in welchem sich wenigstens eine unterbrechungsfreie Stromversorgungsanlage, USV-Anlage, und/oder wenigstens ein Gleichrichtersystem zur unterbrechungsfreien Gleichstromversorgung, GR-System, sowie jeweils eine Eigenenergiequelle, wie Batterieanlage, der USV-Anlage und/oder des GR-System zur Notversorgung wenigstens einer an die USV-Anlage oder an das GR-System angeschlossenen Last befindet, welche ein Wechselstrom- und/oder ein Gleichstromverbraucher sein kann, ist dadurch gekennzeichnet, dass die USV-Anlage und/oder das GR-System mit einem Steuergerät verbunden ist, wobei vor der USV-Anlage und/oder dem GR-System ein Schalter, Netztrennschalter, angeordnet ist, auf den das Steuergerät einzuwirken imstande ist und der mit der USV-Anlage und/oder dem GR-System zu deren Ausschaltung oder Einschaltung verbunden ist, und entweder bei Nachfrage von positiver Regelleistung im Übertragungsnetz das Steuergerät den Schalter öffnet und die oder mehrere USV-Anlagen und/oder das oder mehrere GR-Systeme vom Netz trennt, und die Eigenenergiequelle der USV-Anlage und/oder des GR-Systems Eigenenergie als Regelleistung in das Übertragungsnetz einspeist, wobei die Last über die unterbrechungsfreie Stromversorgung der USV-Anlage und/oder des GR-Systems aus deren Eigenenergiequelle weiter versorgt wird, oder bei der Nachfrage von negativer Regelleistung mittels des Steuergerätes eine oder mehrere variable Lasten zugeschaltet werden so dass ein höherer Energieverbrauch als vor dem Lastabwurf im Übertragungsnetz stattfindet.

In weiterer Ausgestaltung der Erfindung weist das Übertragungsnetz des Energieversorgers eine Netzzentrale auf, welche mit dem jeweiligen Steuergerät der USV-Anlage und/oder des GR-Systems verbunden ist, wobei die USV-Anlage und/oder das GR-System über die Netzzentrale aktivierbar und deaktivierbar ist, und bei Nachfrage von Regelleistung die Netzzentrale das Steuergerät aktiviert, welches entweder die Trennung der USV-Anlage und/oder des GR-Systems vom Übertragungsnetz zu aktivieren oder die variable Last zuzuschalten imstande ist.

In weiterer Ausgestaltung der Erfindung sind zwei parallel geschaltete USV-Anlagen mit einem Lastumschaltmodul vorhanden, der mit der Last verbunden ist, wobei eine der beiden USV-Anlagen ständig über das Lastumschaltmodul zur Versorgung der Last dient und nur die andere der beiden USV-Anlagen Regelleistung liefert, indem diese USV-Anlage vom Übertragungsnetz abgeschaltet und die Eigenenergie der Eigenenergiequelle der USV-Anlage über einen Gleichstrom/ Wechselstrom-Umrichter in das Übertragungsnetz eingespeist wird.

In weiterer Ausgestaltung der Erfindung befindet sich vor derjenigen USV-Anlage zur Lieferung von Regelleistung ein Netztrennschalter, der über das Steuergerät angesteuert wird, wobei dieser USV-Anlage ein zweiter Schalter nachgeschaltet ist, der ebenfalls über das Steuergerät angesteuert wird, wobei dem zweiten Schalter ein Gleichstrom/Wechselstrom-Umrichter nachgeschaltet ist, welcher an das Übertragungsnetz angeschlossen ist zur Einspeisung der Regelenergie.

In weiterer Ausgestaltung der Erfindung ist die Batterieanlage der USV-Anlage/n und oder des/r Gleichrichtersysteme für die Lieferung von Regelleistung um eine vorgegebene Anzahl von weiteren Batterien erweitert.

In weiterer Ausgestaltung der Erfindung ist beim Einsatz wenigstens eines Gleichrichtersystems für die Lieferung von Regelleistung, mit einer dem Gleichrichter nachgeschalteter Last, zur Rückspeisung von Regelleistung in das Übertragungsnetz dem Gleichrichter ein Wechselrichter parallel geschaltet und entweder ist zwischen dem Gleichrichter und dessen Batterieanlage ein Schalter angeordnet, dessen einer der Kontaktwege die Batterie mit der DC-Last und dessen anderer der Kontaktwege die Batterie mit dem Wechselrichter verbindet, oder sowohl dem Gleichrichter als auch dem Wechselrichter ist ein Schalter vorgelagert, an dessen Eingang das Übertragungsnetz angeschlossen ist und dessen einer der Kontaktwege mit dem Gleichrichter und dessen anderer der Kontaktwege mit dem Wechselrichter verbunden ist, wobei das Steuergerät sowohl auf den Schalter als auch auf den Wechselrichter einzuwirken imstande ist.

In weiterer Ausgestaltung der Erfindung ist für die Erzeugung von Regelleistung zur Einspeisung in das Netz, unter Verwendung von wenigstens einer USV-Anlage und/oder eines Gleichrichtersystems, an welche eine Last angeschlossen ist, eine variable Last, wie Lastbank, vorhanden, welche direkt mit dem Übertragungsnetz in Verbindung steht, wobei der USV-Anlage und/oder dem Gleichrichtersystems ein Netztrennschalter vorgeschaltet ist, und das Steuergerät sowohl auf den Netztrennschalter als auch auf die variable Last einzuwirken imstande ist zur Trennung der USV-Anlage und/oder des Gleichrichtersystems (GRS) vom Übertragungsnetz und Zuschalten der variablen Last.

In einer weiteren Ausgestaltung der Erfindung ist ein Steuergerät (SG) für eine Mehrzahl von USV-Anlagen und/oder GR-Systeme vorhanden und mit diesen verbunden, wobei bei Nachfrage von Regelleistung aufgrund vorgegebener Frequenzabweichung der Netzfrequenz entweder die Netzzentrale das Steuergerät zu aktivieren oder das Steuergerät sich automatisch zu aktivieren imstande ist, welches bei Nachfrage von positiver Regelleistung entweder die Trennung der USV-Anlagen und/oder der GR-Systeme vom Übertragungsnetz (ÜN) aktiviert oder bei Nachfrage von negativer Regelleistung variable Lasten zuschaltet.

Kurzbezeichnung der Zeichnung, in der zeigen.
- Figur 1: ein Blockschaltbild für die Grunderzeugungs-Netzlast gemäß des Standes der Technik
- Figur 2: eine Zusammenstellung der Netzstörungen nach IEC 62040-3
- Figur 3: ein USV-System des Standes der Technik in Off-line-Technik
- Figur 4: einen Delta-Umrichter des Standes der Technik
- Figur 5: ein parallel-redundantes USV-System mit gemeinsamer Batterie gemäß des Standes der Technik
- Figur 6: ein erweitertes parallel-redundantes USV-System mit erweiterter Batterieanlage gemäß der Erfindung

- Figur 7: ein Gleichrichtersystem (GRS) mit einer Einspeisung durch einen Wechselrichter AC/DC mit Batterie für die sichere Stromversorgung gemäß des Standes der Technik
- Figur 8: ein erweitertes erstes Gleichrichtersystem gemäß der Erfindung auf der Grundlage des Gleichrichtersystems der Figur 5
- Figur 9: ein erweitertes zweites Gleichrichtersystem gemäß der Erfindung auf der Grundlage des Gleichrichtersystems der Figur 5
- Figur 10: eine erweiterte USV-Anlage mit Lastabwurf gemäß der Erfindung
- Figur 11: ein Schaltbild einer Leistungsfrequenzregelung gemäß des Standes der Technik
- Figur 12: ein Schaltbild eines Frequenzmessumformers gemäß des Standes der Technik
- Figur 13: das Ersatzschaltbild eines PID-Reglers gemäß des Standes der Technik
- Figur 14: ein Blockschaltbild einer erweiterten Großanlage gemäß der Erfindung und
- Figur 15: ein Blockschaltbild einer erweiterten virtuellen Großanlage gemäß der Erfindung

Zum Verständnis der Erfindung sind nachfolgend die Einsatzmöglichkeiten für Energiespeicher, Gleichrichtersysteme, wie für Anlagen der Unterbrechungsfreien Stromversorgung, USV-Anlagen, und die dabei verwendeten Techniken erläutert. Ausgehend von ihren Eigenschaften bieten sich für Energiespeicher außer der erfindungsgemäßen Bereitstellung von Regelleistung weitere Einsatzmöglichkeiten in elektrischen Netzen an. Es sei klargestellt, dass im folgenden Text mit dem Begriff Batterien solche gemeint sind, welche geladen als auch entladen werden können, sogenannte Sekundärzellen oder Akkumulatoren.

### Lastausgleich:

Für die Deckung des schwankenden Energiebedarfs nutzen ÜNB eine Lastregelung. Dieser Lastausgleich (Load Leveling) ist in drei Kraftwerksebenen eingeteilt.

Mit dem Ein- und Ausschalten der entsprechenden Ebenen Grund-, Mittel- und Spitzenlast können längere und größere Schwankungen ausgeregelt werden.

Grundlastkraftwerke wie Kernkraftwerke decken den Grundbedarf an benötigter Leistung und werden selten abgestellt; das Hoch- bzw. Runterfahren solcher Anlagen ist auch mit hohen Kosten und Zeit verbunden. Mittellastkraftwerke dagegen können von der Leistung variiert und bei Bedarf abgeschaltet werden. Da die stundenweise Belastung des Stromnetzes vorhersehbar ist, können Steinkohlekraftwerke mit mittleren Stromentstehungskosten durch Maßnahmen wie Drosselung vorzeitig an die benötigte Leistung angepasst werden. Treten oberhalb der Mittellast weiter Belastungsspitzen auf, werden Spitzenlastkraftwerke zur Spitzenlastdeckung aktiviert. Spitzenlastkraftwerke sind innerhalb Minuten einsatzbereit und sind ansonsten außer Betrieb. Durch die hohe Dynamik sind die Kosten der Spitzenlastabdeckung hoch.

### Lastspitzenbegrenzung:

Oder es kann eine Lastspitzenbegrenzung durchgeführt werden. Bei Industrie- und Gewerbebetrieben, mit entsprechend hoher Leistungsabnahme werden beim Energieliefervertrag zwei Werte berücksichtigt. Die bezogene Menge an elektrischer Arbeit, der über den Arbeitspreis berechnet wird und die maximal benötigte Leistung, die als Leistungspreis definiert wird. Gemessen wird die Leistung als Mittelwert über eine Messperiode, die abhängig vom Energielieferant unterschiedlich ausgelegt wird. Je nach benötigter Leistung, entfallen ca. 25-50% der Nettostromkosten auf den Leistungspreis. Lastspitzen, die innerhalb einer Messperiode entstehen, verursachen einen hohen Leistungsmittelwert, der den Leistungspreis bestimmt. Mit Energiespeichersystemen können Lastspitzen begrenzt und damit Kosten eingespart werden.

### Notstromversorgung:

Stromausfälle können sowohl seitens der ÜNB durch Fehler bei der Lastflussberechnung oder unzureichende Regelleistung bei Lastschwankungen als auch seitens der Verbraucher durch schlechte Wartung oder Fehler in der Elektroinstallation entstehen. Die Prozess- und Fertigungsindustrie ist auf Notstromanlagen angewiesen, um Kosten und Schäden zu vermeiden. Auch Kraftwerke, Rechenzentren, Krankenhäuser u.a müssen vor Stromausfällen geschützt sein. Eine Notstromanlage muss innerhalb von 15 Sekunden die benötigte Energie bereitstellen. Bei Stromausfall können die entsprechenden Verbraucher über Energiespeicher versorgt werden. Damit ist die Voraussetzung für den reibungslosen und uneingeschränkten Betrieb der Anlagen gewährleistet.

### Unterbrechungsfreie Stromversorgung (USV):

Alle USV-Systeme bestehen aus der gleichen Grundschaltung von Gleichrichter, Wechselrichter und Batteriespeicher. Bei empfindlichen Anlagen reicht eine Notstromversorgung nicht aus. Um Störungen und Abstürze zu vermeiden, sind Computer-gestützte Anlagen, Krankenhäuser und Rechenzentren vor Stromausfällen und Netzstörungen sofort zu schützen. Beispielsweise können Überspannungen die empfindliche Elektronik der Computer beschädigen, die erst später bemerkt werden können.

### Batteriespeicher:

Energiespeicher sind aus wirtschaftlicher und technischer Sicht wichtige Bestandteile des elektrischen Netzes. Abhängig von ihren Eigenschaften werden sie in verschiedenen Einsatzbereichen genutzt. Im Rahmen dieser Erfindung sind insbesondere Batteriespeicher relevant, nämlich Akkumulatoren, also wieder aufladbare Batterien. Hauptsächlich werden Batteriespeicheranlagen im Bereich der elektrischen Energieversorgung für die unterbrechungsfreie Stromversorgung genutzt. Grundsätzlich kommen für USV-Anlagen nur Blei- oder Nickel-Kadmiumbatterien in Frage. Die Größe der Batteriespeicheranlage wird entsprechend der zu schützenden Last gewählt.

Batteriespeicheranlagen können in Verbindung mit USV-Anlagen als Energiespeicher für Übertragungsnetze eingesetzt werden. Damit ist mit einer Batteriespeicheranlage der Einsatz in zwei Anwendungsgebiete möglich. Vorteile dieser Auslegung sind, sowohl die Errichtungskosten als auch die Wartungskosten reduziert werden, da entweder bestehende USV-Anlagen genutzt oder erweitert werden oder bei einer Neuanlage die Errichtungskosten geteilt werden. Auch Wartungskosten werden halbiert, da die Wartung der Anlage für die jeweilige Anwendung separat zu sehen ist. Mit optimaler Auslegung der Anlage ist die Steigerung der Zyklenfestigkeit und damit auch der Lebensdauer möglich. Alle USV-Systeme bestehen aus der gleichen Grundschaltung von Gleichrichter, Wechselrichter und Batteriespeicher.

In der Norm IEC 62040-3 ist ein eindeutiges Klassifizierungsschema für USV-Anlagen festgelegt, in der drei Stufen unterschieden werden:
- Stufe 1 Abhängigkeit des USV-Ausganges vom Netz
- Stufe 2 Die Spannungskurvenform des USV-Ausganges
- Stufe 3 Dynamische Toleranzkurven des USV-Ausganges

Die Stufe 1 ist in weitere Klassifizierungen (VFD, VI, VFI), abhängig vom Schutz vor Netzstörungen und der Qualität der Ausgangsspannung zur Eingangsspannung, aufgeteilt. Die Stufe 2 ordnet die Kurvenform der Ausgangsspannung in beiden Betriebsarten (erste Ziffer Netzbetrieb, zweite Ziffer Batteriebetrieb) in ein recht grobes Muster ein (S, X, Y). Die maximal zulässigen dynamischen Abweichungen des USV-Ausgangs werden in Stufe 3 der Norm geregelt.

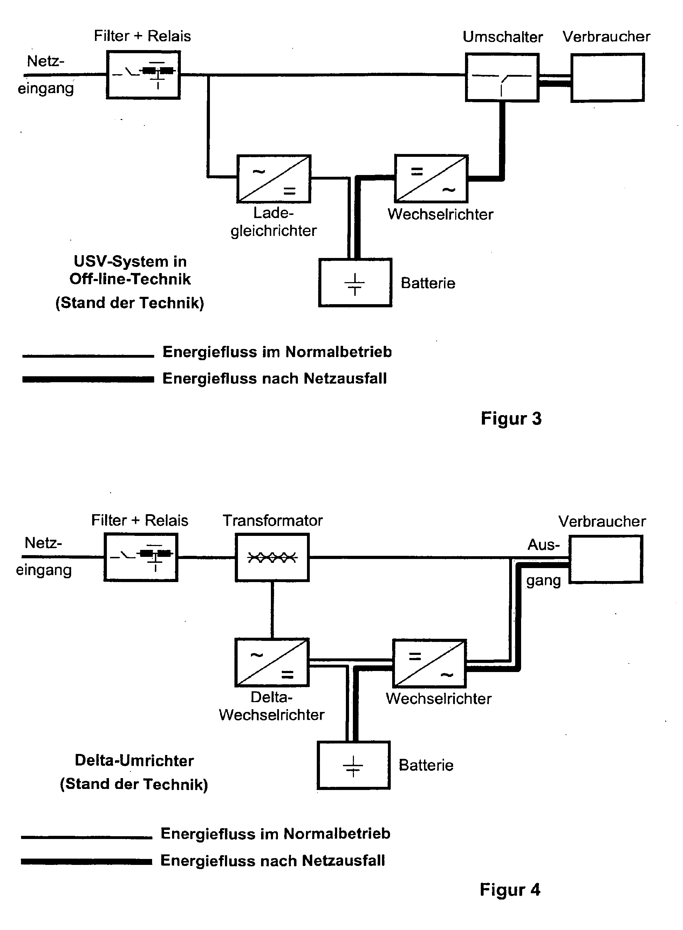

### Passiver Mitlaufbetrieb (VFD), Figur 3:

Beim USV-System der Klassifizierung 3 ist sowohl die Ausgangspannung als auch die Frequenz abhängig vom Eingangswert (VFD: Voltage and Frequency Dependent); Netzstörungen werden dadurch nur bedingt ausgeglichen. VFD-USV-Systeme können nur gegen Stromausfälle, Spannungseinbrüche und Spannungsspitzen schützen. VFD-USV-Systeme sind USV-Anlagen im passiven Mitlaufbetrieb. Die auch Off-line oder Stand-By genannten Technik ist die einfachste Form einer USV-Anlage und verfügt über zwei parallele Strompfade. Im Normalbetrieb wird der Verbraucher über die Netzspannung und einen Umschalter versorgt, wobei keine Einrichtung für die Spannungsregulierung vorhanden ist. In Figur 3 ist zum Verständnis ein derartiges USV-System des Standes der Technik dargestellt. Ebenso lädt das Netz mittels eines Ladegleichrichters die Batterieanlage. Wenn die Spannung oberhalb oder unterhalb eines vorgegebenen Toleranzbereiches liegt, wird innerhalb weniger Millisekunden auf den USV-Zweig umgeschaltet, nämlich von der Batterie über einen Wechselrichter und den Umschalter auf den Verbraucher.

Bei Batteriebetrieb ist eine Generierung einer sinusförmigen Wechselspannung, bedingt durch den günstigen Wechselrichter, nicht möglich. Für Geräte mit induktiver Last, beispielsweise Motoren, ist diese Technik nicht zu empfehlen. Off-line-USV-Anlagen sind nicht mit Geräten zur Spannungsregulierung ausgestattet. Bei Schwankungen der Netzspannung führt dies zur Umschaltung auf USV-Betrieb und damit zur häufigen Nutzung des Batteriespeichers. Auch die vergleichbar hohe Netzrückwirkung ist ein Nachteil dieser Technik. Die Vorteile liegen bei dem hohen Wirkungsgrad von fast 100% und den geringsten Investitionskosten. Off-line-USV-Anlagen werden meist für einphasige Verbraucher und für Leistungen bis zu einigen kVA gebaut. Eine typische Anwendung ist die Absicherung von einzelnen Computern.

Aktiver Mitlaufbetrieb: Bei USV-Systemen der Klassifizierung 2 ist die Ausgangspannung unabhängig vom Eingangswert (VI: Voltage Independent). VI-USV-Systeme bieten Schutz vor Stromausfall, Spannungseinbrüchen, Spannungsspitzen sowie Unter- und Überspannung. Beim aktiven Mitlaufbetrieb ist der USV-Zweig immer mit der Last verbunden und greift stabilisierend und spannungsverbessernd ein. Die Wechselrichter können bei Stromausfall, abhängig von der Qualität, eine annähernde Sinusspannung in Form eines Trapezes am Ausgang erzeugen. Die wichtigsten zwei Systeme mit aktivem Mitlaufbetrieb sind: Line-Interaktiv und Delta-Umrichter.

Line-Interaktiv: Line-Interaktiv auch Active Stanby genannt, ist die Erweiterung der passiven Offline-Technik. Im Normalbetrieb wird seitens eines automatischen Spannungsreglers (AVR= Automatic Voltage Regulator) die Netzspannung geregelt. Abhängig vom Gerät erfolgt die Spannungsregulierung entweder über das Umschalten eines der Last vorgeschalteten und nach dem Umschalter befindlichen grobstufigen Autotransformators oder einem AC/AC-Wandler.

Delta-Umrichter: Die auch Delta Conversion genannte USV-Technik nutzt Umkehrstromrichter (Deltawechselrichter) zur Spannungsregelung bei Spannungsschwankungen mit Zusatz-Wechselrichter. Der wesentliche Unterschied besteht darin, dass die Erweiterung einen weiteren Wechselrichter besitzt, der den Leistungsfaktor der Ausgangsleistung konstant auf cosphi = 1 regelt. Beide Wechselrichter haben die 4-Quadranten-Eigenschaft. Das Übertragen der Leistung in beide Richtungen ist damit gegeben. Der erste Wechselrichter (Deltawechselrichter) ist auf 20% des Ausgangsstromes ausgelegt und dient zur Ausregelung der Ausgangsspannung und zum Laden der Batterie. Der zweite Wechselrichter (Hauptumrichter) ist auf 100% des Ausgangsstromes ausgelegt und hat die gleiche Funktion wie der Deltawechselrichter. Zum Verständnis ist ein derartiger Delta-Umrichter des Standes der Technik in Figur 4 gezeigt.

Bei Normalbetrieb wird der Verbraucher über ein Netzfilter direkt vom Netz versorgt, wobei zwischen dem Netzfilter und dem Verbraucher die Primärspule eines Transformators geschaltet ist. Ist die Spannung niedriger als die Nennspannung, belastet der Hauptumrichter das Netz mit einem zusätzlichen Strom. Dabei erzeugt der Deltawechselrichter an der Sekundärspule des Transformators einen höheren Strom, damit an der Primärseite des Transformators die Differenzspannung (ΔU) ausgeregelt wird. Somit wird die niedrige Netzspannung durch höheren Strombedarf ausgeregelt.

Bei Oberspannung gilt das umgekehrte Prinzip. Der Deltawechselrichter nimmt durch die umgekehrte Polarität Strom auf und der Hauptumrichter speist den entsprechenden Strom ein. Im Falle eines Stromausfalles schaltet der zweite Wechselrichter auf USV-Betrieb und die Last wird über diesen Wechselrichter von der Batterie versorgt.

Frequenzstörungen können in diesem Betrieb, wie auch bei der Line-Interaktiv Technik, nicht behoben werden, wie auch Frequenzstörungen oder Spannungsstöße nicht behoben werden können. Bis zum erneuten Rückschalten in den Normalbetrieb vergehen mindestens 100 ms, die weiterhin zur Belastung der Batterie führt. Eine geringere Nutzungsdauer der Batterien ist die Folge. Der elektronische Schalter schaltet nicht nur bei Netzstörungen, sondern auch beim Kurzschluss in der USV-Anlage. Das führt aber dazu, dass die Verbraucher vom Netz getrennt werden, obwohl die USV-Anlage defekt ist. Ein sofortiger Stromausfall für die angeschlossenen Verbraucher ist die Folge.

Im Gegensatz zur Offline-Technik sind USV-Anlagen im Mitlaufbetrieb vom Wirkungsgrad geringfügig schlechter und vom Preis höher. Dafür werden bei Spannungsschwankungen die Batterien verschont und die Ausgangsspannung ist eine annähernde Sinusspannung.

### Dauerwandler (VFI):

Es seien noch USV-Systeme der Klassifizierung 1, nämlich Dauerwandler oder Doppelwandler (Double Conversion), erwähnt, welche unabhängig von der Spannung und der Frequenz des Eingangswertes (VFI: Voltage and Independent) sind und bei denen die Energie zweimal umgewandelt wird. VFI-USV-Systeme schützen vor allen Netzstörungen nach IEC 62040-3.

Der Grundaufbau eines Dauerwandlers besteht aus Batterie, Gleich- und Wechselrichter. Der Gleichrichter versorgt permanent den Wechselrichter mit Strom und lädt die Batterie. Der Wechselrichter versorgt kontinuierlichen den Verbraucher mit konstanter sinusförmiger Wechselspannung entweder über den Gleichrichter oder über die Batterie. Damit werden angeschlossene Verbraucher auch bei Netzausfall dauerhaft ohne Überbrückungszeit mit sinusförmiger Wechselspannung versorgt. Die Netzspannungs- und Frequenzschwankungen werden durch die Doppelwandlung vollständig behoben und benötigen keine Umschaltung auf Batteriebetrieb.

Dauerwandler-USV-Anlagen sind mit manuellen und elektronischen Bypass ausgestattet, auf den die Verbraucher umgeschaltet werden, wenn die USV defekt ist oder abgeschaltet werden muss. Nachteile der Dauerwandler-Technik liegen im Wirkungsgrad, die durch Doppelwandlung und die komplexe Elektronik geringer ist und in den Netzrückwirkungen, die durch Thyristor-gesteuerte Gleichrichter erzeugt werden. Auch der Preis ist entsprechend der Technik hoch, ist aber im Vergleich zu den Kosten eines Systemausfalls vernachlässigbar klein. Einsatzbereiche sind nahezu alle einphasigen oder dreiphasigen Verbraucher.

### Redundante USV-Systeme:

Meist reicht für kritische Verbraucher wie Kraftwerke oder große Rechenzentren eine USV-Anlage aus Sicherheitsgründen nicht aus. Die Folgen eines Ausfalls oder Defekts während eines Stromausfalls wären schwerwiegend. Jedes elektrische Gerät ist mit Elektronik bestückt, die ausfallen kann. Auch Wartungs- und Inspektionszeiten sind dabei zu berücksichtigen. Um die Ausfallsicherheit zu erhöhen, wird das sogenannte (n-1) Kriterium angewandt. Dabei darf von n vorhandenen USV-Anlagen eine ausfallen, ohne dass dies zu einem Ausfall oder Überlastung des USV-Systems führt. Die Erfüllung des Kriteriums kann durch unterschiedliche Verschaltungen erreicht werden.

### Kaskadiertes System:

Die im englischen Hot-Standby-System bezeichnete Technik arbeitet mit USV-Anlagen, die hintereinander in Reihe geschaltet sind. Im Normalfall ist die vorderste USV-Anlage für den Schutz vor Netzstörungen und Ausfällen zuständig. Die restlichen befinden sich im Ruhezustand. Daher wird die Technik auch Standby-Betrieb genannt. Fällt die aktive Anlage aus schaltet sie auf Bypass und die nächste Anlage übernimmt die Aufgabe.

Der Aufbau ist einfach und kostengünstig, da keine weiteren Geräte benötigt werden. Die Umschaltung auf die nächste USV-Anlage dauert ca. 2-8 ms. Ein kontinuierlicher Ausfallschutz ist damit nicht gewährleistet. Da es keine Lastaufteilung gibt, muss bei einer Umschaltung die USV-Anlage einen Lastsprung von 0 auf 100% innerhalb 8 Sekunden verkraften. Der Wirkungsgrad gegenüber einer USV-Anlage ist wesentlich höher, weil die in Reihe liegenden Anlagen im Leerlauf mitlaufen.

### Parallelbetrieb:

Im Gegensatz zum kaskadierten System sind zwei oder mehr USV-Module parallel geschalten. Alle sind an einen externen Lastumschaltmodul (LUM) verbunden, der bei einem Ausfall einer Anlage auf die restlichen Anlagen umschaltet. Mit speziellen Thyristoren, die im Gegentakt laufen, ist eine unterbrechungsfreie Umschaltung möglich.

Mit dem LUM ist auch eine Lastaufteilung bei der Umschaltung möglich, um große Lastsprünge zu reduzieren. Bei der Wahl eines Parallelsystems sind die zusätzlichen Kosten für das LUM zu beachten, die vom Preis etwa einem USV-Modul gleicher Größenordnung entspricht. Einen vollkommenen Schutz kann die Schaltung nicht bieten. Der Ausfall des LUM führt zu einem Ausfall der gesamten Anlage, dabei spielt es keine Rolle wie viele USV-Module parallel geschalten sind. Ein parallel-redundantes USV-System kann entweder aus mindestens zwei USV-Modulen mit jeweils einer Batterieanlage oder mit einer gemeinsamen Batterieanlage bestehen. Dabei sind die einzelnen USV-Module mit einem Lastumschaltmodul verbunden. Bei USV-Systemen mit gemeinsamer Batterieanlage werden alle Batterien über eine Sammelschiene an die USV-Anlagen angeschlossen. Falls einer davon ausfällt werden die restlichen USV-Anlagen über die gesamte Batterieanlage versorgt. Ein Kurzschluss an der Batterie führt aber zum kompletten Ausfall des gesamten USV-Systems. Diese Schwachstelle wird durch USV-Systemen mit getrennter Batterieanlage beseitigt. Besteht ein Kurzschluss in einem der Batterieanlagen, so wird die entsprechende USV-Anlage deaktiviert und durch die nächste Anlage ersetzt. Diese Variante bietet eine größere Sicherheit, ist aber mit höheren Kosten verbunden.

### Master-Slave-Parallelbetrieb:

Eine "echte" redundante Parallelschaltung, die für eine vollkommene Ausfallsicherheit dient, bietet u.a. General Electric (GE) an. Die Schaltung nennt sich RPA (redundante parallele Architektur). Bei dieser Konfiguration werden die parallelgeschalteten USV-Anlagen nicht über ein Lastumschaltmodul gesteuert.

Für die Steuerung ist eine der USV-Anlagen zuständig. Als Master tauscht dieser mit den übrigen Anlagen über einen redundanten Datenbus (zweifach vorhanden) Informationen aus, damit bei Ausfall die Last automatisch von den verbliebenen USV versorgt werden kann. Falls der Master ausfällt oder die Verbindung vom Master zum gesamten System getrennt wird, bekommt ein andere USV-Anlage die Führungsfunktion. Damit ist die Last in keinem Fall ungesichert am Netz.

### Gleichrichtersysteme:

Unter einem sicheren Gleichrichtersystem versteht man die unterbrechungsfreie Gleichstromversorgung von Gleichstromverbrauchern. Wie auch für Wechselstromverbraucher werden verschiedene Systeme angeboten, die entsprechend der Sicherheitsklasse ausgewählt werden. Dabei wird nur zwischen dem Offline-Betrieb und dem Dauerwandlerbetrieb unterschieden, die im Gegensatz zu den USV-Anlagen keinen Wechselrichter haben.

### Auswahl der USV-Systeme:

Für die Auslegung einer USV-Anlage sind 3 Anforderungen bedeutsam: Festlegung des Schutzbedarfs gegen Netzstörungen, Bestimmung des Leistungsbedarfs und Bestimmung der Autonomiezeit.

Im elektrischen Energienetz können verschiedene Netzstörungen entstehen; die für Verbraucher wichtigsten Netzstörungen nach IEC 62040-3 sind in der Tabelle Figur 2 aufgeführt und dort erläutert. Diese Netzstörungen treten abhängig ihrer Art in verschiedenen Zeitabständen und Dauer auf. Gegen welche Störungen die Verbraucher geschützt werden sollen, ist abhängig von der gewünschten Ausfallsicherheit. Anhand der drei Klassifizierungen nach IEC-Norm 62040-3 ist das geeignete USV-System auszuwählen .

Für die Bestimmung und Berechnung des Leistungsbedarfs sind die Daten über die Leistungsaufnahme der abzusichernden Verbraucher aufzunehmen. Liegen die Angaben als Scheinleistungswerte in (Voltampere)VA vor, kann die USV-Anlage für die Leistung und einem Sicherheitsaufschlag von ca. 30% ausgelegt werden. Bei kritischen Verbrauchern empfiehlt es sich einen höheren Sicherheitsaufschlag zu nehmen. Liegen die Werte nur für die Stromaufnahme vor, so ist diese mit der Netz- bzw. Versorgungsspannung zu multiplizieren, um die Scheinleistung zu ermitteln. Abhängig von der Blindleistung der zu schützenden Last kann der Leistungsfaktor zwischen 0,5 bis 0,7 liegen.

### Bestimmung der Autonomiezeit:

Die Auslegung der Überbrückungszeit bei Stromausfall, ist so zu wählen, dass genügend Zeit besteht, entweder die Verbraucher ordnungsgemäß abzuschalten oder Sekundärmaßnahmen, wie beispielsweise Netzersatzanlagen (NEA), zu aktivieren. Die Notstromgeneratoren können elektrische Energie erzeugen, bis der Brennstoff im Tank verbraucht ist. Damit ist eine Notstromversorgung von mehreren Tagen möglich. In der Regel werden Dieselgeneratoren wegen der Regelbarkeit und des günstigen Wirkungsgrades, vor allem im Teillastbereich, als NEA bevorzugt.

In Rechenzentren liegt die Autonomiezeit im Durchschnitt bei 15 Minuten. Das reicht aus, um über den Server mit sogenannten Shutdown-Programmen die Benutzer zu informieren und die Computer kontrolliert herunter zu fahren. Kritische Verbraucher wie in Kraftwerken dagegen schützen die Eigenbedarfsanlagen mit USV-Anlagen, die Überbrückungszeiten von bis zu einer Stunde erbringen. Oder sie wählen die Autonomiezeit der USV-Anlage nach der Anlauf- und Netzsynchronisationszeit der vorhandenen Netzersatzanlagen.

### Einsatzbereiche von USV-Anlagen für den Gegenstand der Erfindung:

Die Einsatzbereiche von USV-Anlagen können grob in vier Kategorien eingeteilt werden (Europäischer Branchenverband Comité Européen de Constructeurs de Machines Electriques et d'Electronique de Puissance, CEMEP, vom 02.12.2005). Für Bereitstellung von Regelleistung über USV-Anlagen können nur solche USV-Anlagen in Betracht genommen werden, die für hohe Leistungen ausgelegt sind oder über Gleichstromverbraucher verfügen. Somit sind die für Büroanwendungen oder für kleine Rechenzentren genutzten USV-Anlagen nicht oder nur bedingt für diese Anwendung geeignet. USV-Anlagen, die in Kraftwerke, Umspannwerke oder Industrieanlagen installiert sind, ergeben ca. 25% der eingesetzten USV-Anlagen. Sie sind entweder mit großen USV-Anlagen für gewöhnliche Drehstrom- oder Wechselstromverbraucher (AC) oder mit Gleichrichtersystemen für Gleichstromverbraucher (DC) ausgelegt und somit auch als Reserveleistung nutzbar.

### Rechenzentren und Übertragungsstationen:

Die Gesamtleistung von USV-Anlagen in Rechenzentren können bis zu mehrere MVA betragen. Beispielsweise ist das Rechenzentrum von der Internet AG 1&1 in Karlsruhe mit vier USV-Blöcken mit jeweils 1,1 MVA Leistung und einer Kapazität von 1.700 Ah für eine Gesamtleistung von 3,3 MVA ausgelegt. Der vierte Batterieblock steht als Reserve bereit, wenn neben dem Stadtstrom auch einer der Batterieblöcke ausfallen sollte. Bei einem Stromausfall erfolgt die Versorgung aller Rechner zunächst über drei Dauerwandler USV-Anlagen. Dabei reicht die Kapazität für eine Überbrückungszeit von 17 Minuten aus. Wenn nötig, können nach der Anlauf- und Netzsynchronisationszeit von 17 Sekunden die USV-Blöcke durch fünf Notstromgeneratoren mit jeweils 2,4 MVA Leistung unterstützt werden.

Die Bereitstellung von Regelleistung durch große USV-Anlagen ist erfindungsgemäß mit geeigneter Erweiterung problemlos möglich. Da nicht alle Rechenzentren mit USV-Anlagen in der Größe ausgestattet sind, ist durch das Zusammenschalten mehrerer dezentralen Anlagen in verschiedenen Standorten eine hohe Leistung erreichbar. Dabei sollte die USV-Anlage mindestens 100 KVA Leistung erbringen. Das Gleiche gilt auch für Übertragungsstationen, die im Durchschnitt für etwa 200 KVA Leistung ausgelegt werden.

### Umspann- und Kraftwerke:

Kraftwerke und Umspannanlagen arbeiten im Gegensatz zu Rechenzentren auch mit Gleichstromverbraucher, die mit sicheren Gleichrichtersystemen die Eigenbedarfsanlagen vor Netzausfällen schützen. Sowohl mit solchen USV-Anlagen als auch mit Gleichrichtersystemen ist die Vorhaltung von Regeleistung möglich.

### Optimale USV-Anlagen für Regelleistung:

Ob eine USV-Anlage erfindungsgemäß auch als Regelleistung genutzt werden kann hängt von der Gesamtleistung der zu schützenden Last ab. Je geringer die einzelne Leistung, desto mehr müssen einzelne Anlagen zusammengeschaltet werden, um die benötigte Mindestleistung laut den Präqualifikationsanforderungen zu erhalten. USV-Anlagen sind in der Regel für eine Überbrückungszeit von 15 Minuten ausgelegt. Somit ist mit allen USV-Anlagen, ab einer Leistung von ungefähr 100 kVA, mit erfindungsgemäßer, geeigneter Erweiterung und gegebenenfalls Zusammenschaltung die Vorhaltung von Regelleistung möglich.

Bei Regelleistungsbedarf ist die Energie in Form von Drei-Phasen-Wechselspannung ins Netz zu speisen. Für die Netzrückspeisung ist bei AC-USV-Anlagen ein spezieller Umkehrstromrichter notwendig, der nur von einigen Herstellern angeboten wird. Bei Anlagen für DC- Verbraucher reicht ein geeigneter Wechselrichter aus, der im Vergleich zum Umkehrstromrichter wesentlich günstiger ist. Mit anderen Verfahren, beispielsweise dem Lastabwurf-Verfahren, ist auch die Erbringung von Regelleistung ohne Netzeinspeisung möglich.

### Erfindungsgemäße Auslegung von USV-Anlagen für Regelleistung:

USV-Anlagen sind ausgelegt für die unterbrechungsfreie Stromversorgung von kritischen Verbrauchern. Um damit auch eine Vorhaltung von Regelleistung zu erreichen ohne die eigentliche Funktion zu beschränken bedarf es einer technischen Erweiterung, wobei die technischen und baulichen Gegebenheiten berücksichtigt werden müssen. Damit auch beide Funktionen erfüllt werden, ist erfindungsgemäß die Batterieanlage zu erweitern. Bei der Erweiterung der Batterieanlage ist auf die Dimensionierung und der Technik der Batterie zu achten. Eine permanente Leistungsregelung ist nur mit Batterien mit hoher Zyklenfestigkeit erreichbar. Für die Erbringung der Regelleistung innerhalb weniger Sekunden bis 30 Sekunden ist eine Frequenzmessung und Regelung Vorort notwendig. Die zur Leistungsfrequenzregelung benötigten Geräte müssen abhängig ihrer Genauigkeit und Auflösung ausgewählt werden. Die Kommunikationseinheit für den Datenaustausch sowohl intern als auch extern ist zu planen und zu erweitern.

### Erweiterungsmöglichkeiten:

Abhängig von der jeweiligen Spannungsform bieten sich verschiedene Erweiterungsmöglichkeiten zum Schutz der eigentlichen Funktion und zur Bereitstellung von Regelleistung an. Redundante USV-Anlagen von USV-Systemen können mithilfe von Stromumrichtern für die Regelleistung genutzt werden. Bei Gleichrichtersystemen besteht die Möglichkeit mit geeigneter Erweiterung auch Regelleistung anzubieten. Für die Einspeisung in das elektrische Netz wird ein Wechselrichter benötigt. Regelleistung ohne Energierückspeisung zu erbringen, ist durch das Lastabwurfverfahren möglich.

### Einspeisung durch Stromumrichter:

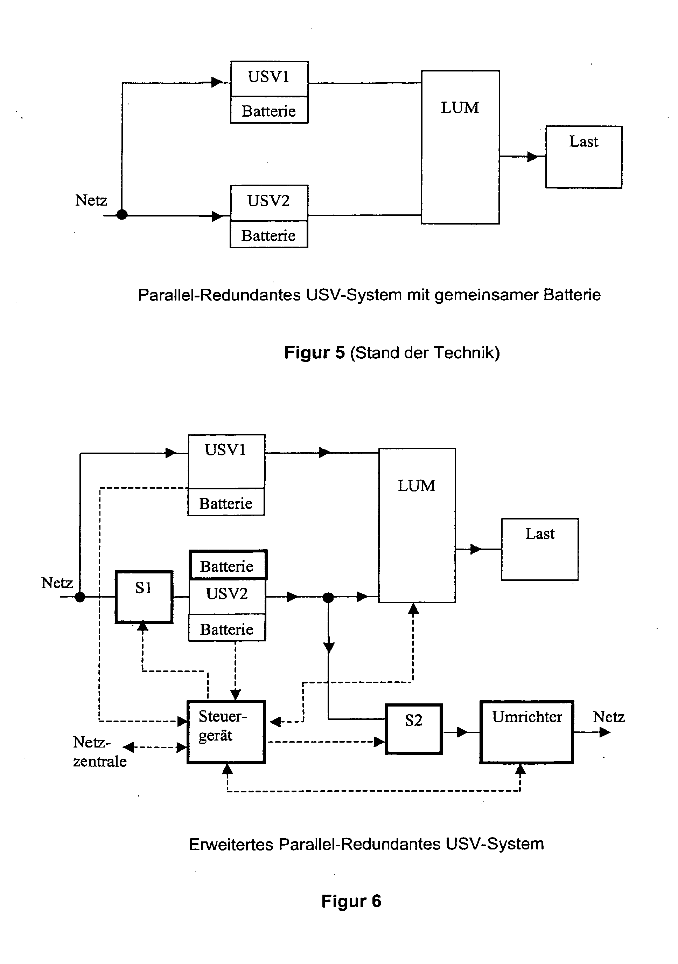

Ein Parallel-Redundantes USV-System mit gemeinsamer oder getrennter Batterieanlage besteht aus mindestens zwei parallelen USV-Modulen einschließlich Batterien, Figur 5, welche beiden USV-Module USV1 und USV2 zur Umschaltung von dem einen auf den anderen Modul mit einem Lastumschaltmodul LUM, verbunden sind, an dem die Last hängt. Bei einem System mit zwei Modulen schützt das zweite Modul die Last, wenn das erste Modul ausfällt.

Dieses USV-System kann auch für die erfindungsgemäße Erbringung von Regelleistung genutzt werden ohne die eigentliche Funktion zu gefährden. Das USV-System der Figur 5 muss für diese Anwendung entsprechend der Figur 6 mit weiteren Geräten, welche fett umrandet gezeichnet sind, erweitert werden, nämlich um eine Erweiterung der Batterieanlage des USV2 oder USV1 oder von beiden. Gemäß Figur 6 ist dem USV2 ein Lasttrennschalter S1 mit Netzeingang vorgelagert. In der Netzzentrale des die USV-Anlage und/oder das GR-System betreibenden Netzverbrauchers befindet sich ein Steuergerät, welches mit einem ersten Lasttrennschalter S1 verbunden ist und auf diesen zu dessen Schaltung einzuwirken imstande ist. Dem Steuergerät nachgeschaltet ist ein zweiter Schalter S2, auf den ein Umrichter bzw. Stromumrichter/Wechselrichter folgt, an den wiederum das Netz angeschlossen ist. Das USV2 ist sowohl mit dem LUM als auch über den zweiten Schalter S2 mit dem Stromumrichter und danach mit dem Netz verbunden. Zur Unterscheidung der unterschiedlichen Leitungen, sind die Versorgungsleistungen liniert und die Kommunikationsleitungen gestrichelt dargestellt. Die Pfeile zeigen nach dem Verbraucherzählpfeilssystem die Flussrichtung des Stromes und die Übertragungsrichtung der Informationen.

Steuergerät: Das Steuergerät, Figur 6, ist das wichtigste Gerät unter den erweiterten Geräten. Es ist für die Kommunikation für die internen Geräte des USV-Systems und der Netzzentrale des die USV-Anlage und/oder das GR-System betreibenden Netzverbrauchers zuständig. Außerdem werden bei Regelleistungsbedarf vom Steuergerät Steuerbefehle an die Lasttrennschalter S1, S2 der USV-Anlage übermittelt. Aus Figur 6 ist ersichtlich, dass das Steuergerät sowohl mit der Netzzentrale, den beiden USV1 und USV2, wie auch mit den Schaltern S1 und S2, wie auch mit der LUM, als auch mit dem Stromumrichter kommuniziert.

Prinzipiell sind zwei Möglichkeiten der Beeinflussung des Steuergerätes gegeben. Entweder ist das jeweilige Steuergerät der USV-Anlage und/oder des GR-Systems mit einer Netzzentrale (NZ-ÜNB) des Übertragungsnetzes des Energieversorgers verbunden, so dass von dieser entfernten Netzzentrale im Bedarfsfall Einfluss auf das Steuergerät genommen werden kann. Oder das mit der USV-Anlage und/oder dem GR-System verbundene Steuergerät ist mit einer internen Netzzentrale des Netzverbrauchers verbunden, in der die Frequenz des Netzes mittels Frequenzmessung überwacht wird. Das Steuergerät erhält den Frequenzwert des Netzes aus der Netzzentrale mitgeteilt oder überwacht selbsttätig die Frequenz des Netzes und ist imstande, bei vorgegebener positiver oder negativer Abweichung der Frequenz des Netzes die USV-Anlage und/oder das GR-System automatisch zu aktivieren. Hierzu ist das Steuergerät mit der hausinternen Netzzentrale des die USV-Anlage und/oder das GR-System betreibenden Netzverbrauchers, der an das elektrische Übertragungsnetz des ÜNB angeschlossen ist, verbunden.

Lasttrennschalter S1: Der erste Lasttrennschalter S1 dient aufgrund Aktivierung des USV-Moduls USV2 zur Erbringung der Regelleistung. Dafür müssen sie vom Netz getrennt und auf Batteriebetrieb geschaltet werden. Mit einem Schalter 2, ein Thyristorschalter S2, wird die Verbindung vom USV-Modul USV2 zum Stromumrichter erstellt und damit die Netzspeisung ermöglicht. Das darf nur dann geschehen, wenn das Steuergerät den entsprechenden Steuerbefehl erteilt.

Der Stromumrichter/Wechselrichter ermöglicht das Einspeisen einer sinusförmigen Wechselspannung in das elektrische Verbundnetz durch die Stromumkehr-Funktion.

Batterieerweiterung: Die Batterieerweiterung des USV2, und/oder auch des USV1, ist für den Extremfall ausgelegt, damit auch nach bzw. bei Erbringung der Regelleistung genügend Energie vorhanden ist, um die Last versorgen zu können. Die Auslegung ist sowohl für positive, als auch für negative Regelleistung auszuwählen. Bei einer 100 kVA Anlage entspricht dies jeweils 100 kVA für 15 Minuten.

### Funktioneller Ablauf:

Solange, gemäß der Schaltung Figur 6, keine Regelleistung benötigt wird, arbeitet das erweiterte USV-System im Normalbetrieb. Erst wenn das Steuergerät einen Steuerbefehl von der - hier hausinternen - Netzzentrale erhält, in welcher die Frequenz überwacht wird, übernimmt einer der USV-Module USV1 oder USV2 aufgrund eines Schaltbefehls des Steuergerätes die Aufgabe zur Erbringung der Regelleistung. Die Menge an benötigter Regelleistung wird vom (nicht dargestellten) Frequenzleistungsregler der Netzzentrale an das Steuergerät übermittelt. Das Steuergerät prüft über die Abfrage des USV-Moduls, ob diese Leistung erbracht werden kann und bestätigt der internen Netzzentrale die Verfügbarkeit. Nur wenn eine bestimmte Mindestkapazität überschritten und alle USV-Module funktionsfähig sind, kann ein Modul zur Erbringung von Regelleistung aktiviert werden. Dafür wird das entsprechende USV-Modul, hier USV2, über den Schalter S1 vom Netz getrennt und auf Batteriebetrieb umgestellt. Anschließend schaltet der Schalter S2 das USV-Modul USV2 auf den Stromumrichter, Figur 6 Umrichter genannt, um. Abhängig von der Frequenz wird die in das Netz eingespeiste Leistung durch den Wechselrichter des Stromumrichters verändert. Entweder kann das analoge Signal direkt vom Frequenzleistungsregler entnommen oder über das Steuergerät weitergeleitet werden.

Die Verbraucher sollen trotz der erfindungsgemäßen Erweiterung gegen alle Vorfälle geschützt sein. Ein gleichzeitiger Ausfall der Stromversorgung, eines USV-Moduls und einem auftretenden Regelleistungsbedarf darf nicht zu einem Ausfall des Systems führen. Falls der Extremfall auftritt, schaltet das Steuergerät beide Schalter S1 und S2 aus und deaktiviert die Erweiterung. Anschließend kann der Verbraucher über das gesamte USV-System versorgt werden, womit bei erfindungsgemäßer Erweiterung keine Gefahr für den Verbraucher besteht. Damit die Regelleistung weiterhin erbracht werden kann, kann vorgesehen werden, dass das Steuergerät zur gleichen Zeit ein Signal an die interne Netzzentrale sendet, welche ein oder mehrere USV-Module eines anderen, ebenfalls mit dem Steuergerät verbundenen USV-Systems aktiviert. In diesem Fall kann also vorgesehen sein, dass ein Steuergerät eine Mehrzahl von unterschiedlichen USV-Modulen, auch unterschiedlicher Netzverbraucher, ansprechen kann.

Regelleistung: Die Menge an Regelenergie, die zur Verfügung steht, ist abhängig von der Größe des Wechselrichters der USV-Anlage. Die Wechselrichter werden entsprechend der zu sichernden Last dimensioniert, wobei die Erweiterung der Batterieanlage nur bis zu einer bestimmten Größe möglich ist. Die Erweiterung der Batterieanlagen ist mindestens für den Extremfall, beispielsweise im Fall eines Regelleistungsbedarfs und einem anschließenden Stromausfalles, auszulegen. Die Auslegung des Umrichters, Figur 6, bezieht sich auf die maximal zu erbringenden Regelleistung.

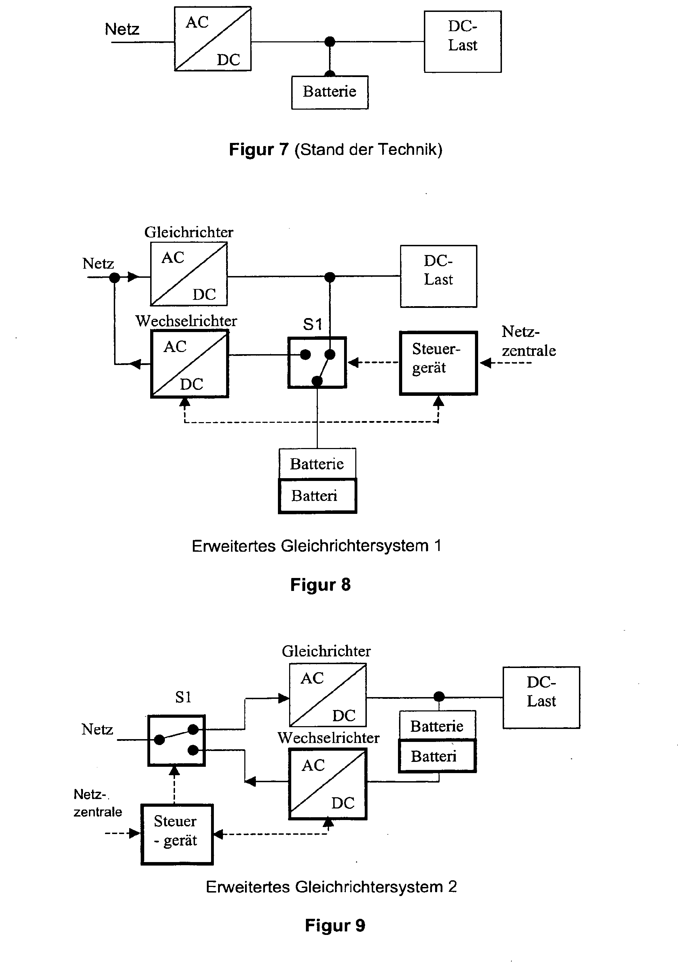

### Einspeisung durch Wechselrichter, Figur 7:

Gleichrichtersysteme (GRS) gemäß der Figur 7 für die sichere Stromversorgung können ebenfalls für die Erbringung von Regelleistung genutzt werden. Das Netz ist mit einem AC/DC-Gleichrichter verbunden, an welchem direkt der Verbraucher, als DC-Last gekennzeichnet, angeschlossen ist. Für die Pufferung bei Netzausfall ist die Batterieanlage, wie in Figur 7 gezeigt, zuständig, welche ebenfalls an den AC/DC-Wandler angeschlossen ist. Für die erfindungsgemäße Erweiterung bieten sich zwei Möglichkeiten an die entsprechend des Sicherheitsfaktors und der Errichtungskosten ausgewählt werden. Vom Aufbau unterscheiden sie sich nur vom Einbauort des Schalters, ansonsten werden die gleichen Bauteile benötigt.

Wechselrichter: Mit dem Wechselrichter wird die benötigte Regelleistung ins Netz gespeist, dabei wird die Gleichspannung wieder in Wechselspannung umgewandelt. Die Dimensionierung ist nach der zu maximalen Einspeiseleistung auszuwählen.

Steuergerät: Wie auch bei den USV-Anlagen - Figur 6 - ist das Steuergerät für die Kommunikation mit den internen Geräten des Gleichrichtersystems und der hausinternen Netzzentrale zuständig. Außerdem werden bei Regelleistungsbedarf vom Steuergerät aus die Steuerbefehle an die entsprechenden Geräte übermittelt.

Batterie: Die Batterieerweiterung ist für die gewünschte Regelleistung auszulegen, wobei nur durch die Räumlichkeiten und hinsichtlich der Kosten Grenzen gesetzt sind.

Schalter S1: Gemäß der Figur 8 verbindet ein Thyristorschalter S1 mit zwei unterschiedlichen Schaltstellungen bei Regelleistungsbedarf entweder den Wechselrichter AC/DC mit der Batterieanlage; diese Variante 1 ist in Figur 8 gezeigt. Oder gemäß der Figur 9 wird der Wechselrichter mit dem Netz verbunden, Variante 2, damit die Netzspeisung ermöglicht wird. Das darf nur dann geschehen, wenn das Steuergerät den entsprechenden Steuerbefehl erteilt.

### Variante 1, Figur 8:

Hierzu ist gemäß der Figur 8 sowohl der Gleichrichter AC/DC aus auch der parallel dazu angeordnete Wechselrichter AC/DC mit dem Netz verbunden, wie die Pfeilverbindungen es anzeigen, so dass der Wechselrichter AC/DC Energie ins Netz einzuspeisen imstande ist. Die in Erweiterung der Anlage gemäß Figur 7 hinzugefügten Geräte sind fett umrandet. Der Gleichrichter AC/DC empfängt Energie aus dem Netz, der Wechselrichter kann, wie nachfolgend geschildert, Leistung (Regelleistung) in das Netz abgeben. Am Gleichrichter AC/DC hängt die DC-Last; gleichzeitig ist der Gleichrichter AC/DC über den Schalter S1 zur Aufladung der Batterieanlage Batterie/Batterie mit dieser verbunden. Bei Netzausfall versorgt die Batterieanlage in der in Figur 8 gezeigten Schalterstellung des Schalters S1 die DC-Last. Die DC-Last ist unter normalen Umständen sowohl mit dem Gleichrichter AC/DC als auch über den Schalter S1 mit der Batterieanlage Batterie/Batterie verbunden.

Wird Regelleistung benötigt, so gibt die Netzzentrale einen Schaltimpuls in das Steuergerät, welches sowohl mit dem Schalter S1 als auch mit dem Wechselrichter AC/DC verbunden ist, so wird der Verbraucher DC-Last mittels des Schalters S1 von der Batterie getrennt und nur über den Gleichrichter AC/DC vom Netz versorgt. Der Wechselrichter AC/DC wird im gleichen Moment mittels des Schalters S1 mit der Batterie verbunden und speist nun aus der Batterieanlage Batterie/ Batterie Energie, Regelleistung, ins Netz. Fällt in diesem Moment der Strom bzw. das Netz aus, so schaltet der Schalter S1 die Batterieanlage Batterie/Batterie auf die Last um.

Bei dieser Variante ist darauf zu achten, dass bei einem Fehler am Schalter S1 entweder keine Regelleistung oder keine sichere Stromversorgung über die Batterieanlage gewährleistet ist. Dieses Problem kann durch entsprechende Bypass-Verbindungen gelöst werden. Außerdem ist beim Schalten mit Umschaltzeiten zu rechnen, die im ungünstigen Fall zu Ausfällen von einigen 1-10 ms führen können. Dafür bietet die Batterieerweiterung einen höheren Schutz vor Ausfällen.

### Variante 2, Figur 9:

Die Variante 2 beruht ebenfalls auf der Grundschaltung der Figur 7, wobei die erweiterten Geräte ebenfalls fett umrandet sind. Im Vergleich zur Variante 1 ist der Schalter S1 vor dem Gleich- und Wechselrichter AC/DC angeordnet, der übrige Aufbau der Komponenten gleicht dem der Figur 8. Solange kein Bedarf an in das Netz zu speisender Regelleistung besteht, ist der Schalter S1 auf den Gleichrichter geschaltet; der Gleichrichter AC/DC bzw. die Batterieanlage Batterie/Batterie versorgen die DC-Last.

Wenn das Steuergerät über die interne Netzzentrale Regelleistungsbedarf im Netz meldet, schaltet der Schalter S1 vom Gleichrichter zum Wechselrichter um. Damit ist der Gleichrichter vom Netz getrennt und der Wechselrichter AC/DC speist über die Batterieanlage Batterie/Batterie Energie ins Netz. Währenddessen wird die DC-Last ebenfalls über die Batterieanlage Batterie/Batterie versorgt. Fällt während der Energieeinspeisung das Netz aus, schaltet der Wechselrichter aus Sicherheitsgründen ab; die Last wird weiterhin von der Batterie versorgt.

Ein Fehler am Schalter führt zur Trennung der Verbindung von Netz zum Gleichrichter oder zum Wechselrichter. Auch hier kann durch einen geeigneten Bypass geholfen werden. Im Gegensatz zur ersten Variante 1 ist durch die kontinuierliche Versorgung der DC-Last mit keinen Umschaltzeiten zu rechnen, da die DC-Last ständig an der Batterieanlage Batterie/Batterie hängt.

Regelleistung: Im Vergleich zum USV-System ist die maximal zu erbringende Regelleistung nicht abhängig vom Gleichrichtersystem. Somit ist es möglich in Abhängigkeit der Räumlichkeit und den Errichtungskosten die Batteriekapazität frei zu wählen. Der Wechselrichter für die Netzeinspeisung wird anschließend für die maximal mögliche Regelleistung ausgelegt.

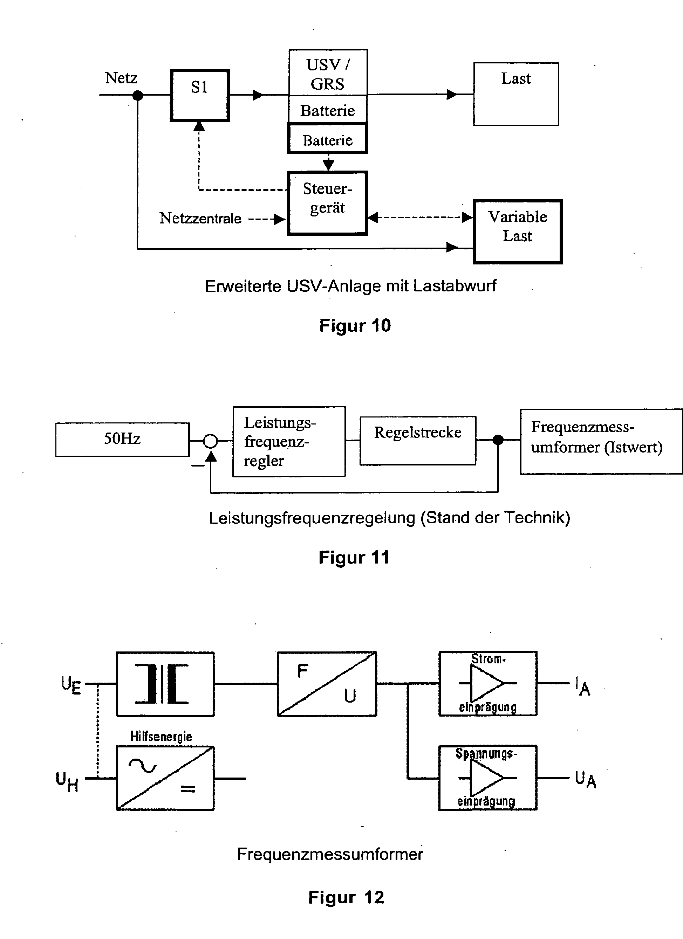

### Lastabwurf-Verfahren, Figur 10:

Alle USV-Anlagen (USV) und Gleichrichtersysteme (GRS) für die sichere Stromversorgung können anhand des Lastabwurf-Verfahrens für die Erzeugung von Regelleistung zur Einspeisung in das Netz genutzt werden. Die notwendigen Geräte für die Erweiterung sind in der Figur 10 wiederum in Fettumrandung gekennzeichnet, nämlich ein Schalter S1, eine Batterieerweiterung der USV oder des GRS, eine variable Last sowie ein Steuergerät. Gemäß der Figur 10 ist der Eingang des Schalters S1 mit dem Netz verbunden, der Ausgang des Schalters S1 ist auf die USV-Anlage/Gleichrichtersystem mitsamt deren Batterieanlage Batterie/Batterie gelegt; an den Ausgang der USV-Anlage/Gleichrichtersystem ist die Last angeschlossen. Die interne Netzzentrale ist wiederum auf das Steuergerät gelegt, dessen Ausgang mit dem Schalter S1 zur Aktivierung desselben verbunden ist. Ebenso ist die Batterieanlage mit dem Steuergerät verbunden. Durch die Nutzung der Batterieanlage und der Last ist im Gegensatz zur letzten Erweiterung (Figur 9) keine Energieeinspeisung ins Netz nötig. Wenn positive Regelleistung erbracht werden muss, wird der Verbraucher vom Netz getrennt. Durch die Trennung der Last vom Netz wird das Netz entlastet. Eine Entlastung in diesem Fall kann mit einer Einspeisung gleich gesetzt werden. Während des Lästabwurfes ist die Last durch die Batterieanlage zu versorgen.

Ebenso kann eine negative Regelleistung erzeugt werden, Figur 10, was durch das Zuschalten einer variablen Last erreicht wird. Das Netz ist direkt mit der variablen Last verbunden, welche bidirektional mit dem Steuergerät verbunden ist. Wie auch bei den vorherigen Lösungen, ist das Steuergerät gemäß der Figur 10 für die Kommunikation mit der Netzzentrale zuständig. Das Zuschalten der variablen Last (Pumpspeicherwasserwerke, Lastbänke, teilgeladene Batterieanlagen usw.) durch das Öffnen des Schalters S1 bei Bedarf einer negativen Regelleistung wird ebenfalls vom Steuergerät übernommen. Für die Erbringung von negativer Regelleistung dient somit die variable Last, die durch ihr Zuschalten, das Zuschalten einer weiteren Last, mehr Energie vom Netz entnimmt und damit die Belastung erhöht.

Bei Bedarf von positiver Regelleistung hingegen ist der Schalter S1 zuständig für das Trennen der Last vom Verbraucher. Durch diesen Lastabwurf wird indirekt Energie ins Netz gespeist, weil weniger aus dem Netz bezogen wird.

Die Batterieerweiterung, fett umrandet, der Batterieanlage ist für die Erhöhung der Autonomiezeit um 15 Minuten auszulegen, damit bei Bedarf an positiver Regelleistung die Last vom Netz getrennt und durch die Batterieanlage versorgt werden kann. Die Erweiterung bezieht sich nur auf die positive Regelleistung. Die negative Regelleistung wird über die variable Last erbracht. Mit der Erweiterung ist auch nach Erbringung der Regelleistung genügend Energie vorhanden um die Last bei Netzausfall zu versorgen.

Verfahrensmäßig ist im Normalfall der Verbraucher über die USV-Anlage mit dem elektrischen Netz verbunden. Sinkt die Netzfrequenz unter 49,99 Hz, ist positive Regelleistung zu erzeugen. Durch die Umschaltung auf Batteriebetrieb wird die Last vom Netz getrennt und das Netz wird entlastet. Eine Entlastung entspricht einer Einspeisung gleicher Leistung. Im Fall einer zu hohen Frequenz ist das Netz stärker zu belasten. Die variable Last erhöht die Belastung abhängig der Frequenz und erzeugt somit negative Regelleistung.

Im Gegensatz zum USV-System ist nur die Höhe an positiver Regelleistung abhängig von der Leistung des Wechselrichters. Die Batterieerweiterung ist entsprechend dieser Leistung auszulegen. Negative Regelleistung kann je nach Leistung der Lastbank bzw. der variablen Last jederzeit erbracht werden.

Die Erweiterung gemäß der Figur 10 ist an allen üblichen USV-Anlagen, sogar an USV-Systemen und Gleichrichtersystemen, problemlos möglich. Ohne einen direkten Eingriff in die USV-Anlage und ohne Netzeinspeisung kann Regelleistung erbracht werden. Damit entfällt der spezielle Stromumrichter. Die Batterieanlage ist nur für positive Regelleistung auszulegen. Damit entfällt die Batterieerweiterung für die negative Regelleistung ebenfalls. Die Lastbank für negative Regelleistung kann entweder am Standort der USV-Anlage oder direkt an der internen Netzzentrale installiert werden.

Für die Vorhaltung und Bereitstellung von negativer Regelleistung werden variable Lasten benötigt. Wie auch für die positive Regelleistung liegt die Mindestangebotsgröße für negative Primärregelleistung bei 10 MW. Beispielsweise können mit der Zusammenschaltung von 3 Lastbänken mit einer jeweiligen Leistung von 4 MW 12 MW Regelleistung vorgehalten werden. Mit jeweils einem eigenen Schaltraum können die Widerstände entweder Vorort oder über eine Fernsteuerung aktiviert werden. Die Belastung kann dabei zwischen 1kW bis 10 MW variiert werden.

### Erweiterte Batterieanlage:

Nicht alle Bleibatterietypen sind für Regelleistung einsetzbar. Es ist auch zu prüfen inwieweit die Batterieanlage erweitert und welcher Teil davon als Regelleistung vorgehalten werden kann. Batterien, die für Regelleistung ausgelegt sind, müssen eine hohe Zyklenfestigkeit nachweisen. Je nach Anwendungsbereich wird nach Zyklenfestigkeit, Lebensdauer, maximale Kapazität, Wartung und Kosten ausgewählt.

Für Batterieanlagen für USV-Anlagen mit Einspeisung, die jeder Zeit elektrische Energie aufnehmen und abgeben können, ist ein geeigneter Arbeitspunkt zu wählen. Damit positive und negative Regelleistung in gleicher Menge vorgehalten werden kann, dürfen die Batterien nicht über den Arbeitspunkt geladen werden. Die Aufnahme und Abgabe von positiver und negativer Energie in gleicher Menge ist dadurch möglich. Die gesamte Batterieanlage muss aber beide Funktionen erfüllen können.

Um ein Vielfaches der Gesamtleistung der Anlage als Regelleistung erbringen zu können, sind Gleichrichtersysteme zu wählen. Im Gegensatz zu den USV-Systemen haben Gleichrichtersysteme keine technische Einschränkung. Abhängig von der Räumlichkeit und der gewünschten Regelleistung wird die Erweiterung ausgelegt. Wie auch bei der USV-Anlage wird der Entladestrom aus der Entladetabelle der entsprechenden Batterie entnommen. Gleichrichtersysteme sind meist mit einer Autonomiezeit von mindestens 60 Minuten ausgelegt. Eine höhere Autonomiezeit ermöglicht eine höhere Nutzung der vorhandenen Batterieanlage für Regelleistung.

### Batterieerweiterung für Lastabwurf-Verfahren:

Beim Lastabwurf-Verfahren wird im Gegensatz zu den vorherigen Lösungen keine Regelleistung von der Batterie abgegeben. Die Batterieerweiterung ist damit nur für die positive Regelleistung auszulegen. Durch den Lastabwurf ist bei allen USV-Anlagen und Gleichrichtersystemen die maximale Regelleistung von der Last abhängig; die Mindestleistung für die Erweiterung ist von der Anzahl der Stränge abhängig. Bei mehr als einem Strang kann durch das Hinzufügen weiterer Stränge die optimale Erweiterung für Regelleistung ausgelegt werden.

### Leistungsfrequenzregelung, Figur 11:

Die Leistungsfrequenzregelung erfolgt wie bei Kraftwerken, wobei hier nicht der Dampfmassenstrom angedrosselt wird, sondern mit entsprechenden Geräten die Leistung geregelt wird. Das Blockschaltbild in Figur 11 zeigt einen einfachen Standardregelkreis des Standes der Technik, bestehend aus Leistungsfrequenzregler, Regelstrecke mit am Ausgang derselben negativer Rückkopplung des Istwertes zur Regelung der Frequenz sowie nach der Regelstrecke einen Frequenzmessumformer, der den Istwert liefert. Der zu regelnde Wert ergibt sich aus der Differenz des vorgegebenen Wertes (Sollwert) und der gemessenen Frequenz (Istwert). Die einzelnen Blöcke werden kurz erläutert.

Soll- und Istwert: Die Primärregelleistung ist entsprechend des Transmissionscodes bis zu einer Frequenz von ± 200 mHz kontinuierlich auszuregeln. Als Sollwert ist die Nennfrequenz von 50Hz zu wählen. Der Unempfindlichkeitsbereich, in dem die technischen Geräte unter Einbeziehung der Primärregeleinrichtungen aus technischen Gründen keine Primärregelleistung erbringen können, liegt bei ±10 mHz. Mit der Berücksichtigung der Vorgaben sind die Werte zwischen 49,8 Hz bis 49,99 und von 50,01 Hz bis 50,2 Hz aufzunehmen.

Der gemessene Sollwert ist als Gleichstromsignal an den Leistungsfrequenzregler zu übergeben. Zur Umformung und Trennung einer Frequenz in ein eingeprägtes Gleichstrom- und Gleichspannungssignal werden Frequenzmessumformer verwendet. Die Auswertung und die Umformung erfolgt in einem Mikrocontroller. Wie in Figur 12 dargestellt gelangt die Messgröße über einen Spannungswandler, der zur galvanischen Trennung dient, an den Mikrocontroller. Für ein Ausgangssignal mit lebendem Nullpunkt, z. B. 4-20 mA anstatt 0-20 mA, sowie bei stark schwankender Nennspannung und schwankenden Frequenzbereichen ist eine Hilfsenergie erforderlich. Der Messbereich ist zwischen 49,8 bis 50,2 Hz zu wählen. Die Genauigkeit der Frequenzmessung muss unterhalb ± 10 mHz sein. Eine Abtastung der Frequenz unterhalb einer Sekunde sollte für die Frequenzregelung ausreichen.

Bei einer Batterieanlage, die nach dem Lastabwurf-Verfahren arbeitet, ergibt eine Ungenauigkeit von ± 9,5 mHz bei einem Frequenzbereich von 200 mHz eine Auflösung von 22 Schritten. Die Regelleistung ist nach Bedarf kontinuierlich von 0 - 30 Sekunden auf die gesamte angebotene Regelleistung zu erhöhen. Somit sind für 30 Sekunden 30 Schritte nötig. Mit der Zusammenschaltung von 100 kW Batterieanlagen zu einer Gesamtleistung von 10 MW können 100 Schritte gefahren werden. Anschließend ist das umformierte Messsignal zur Leistungsfrequenzregelung an den entsprechenden Regler zu übergeben.

### Leistungsfrequenzregler:

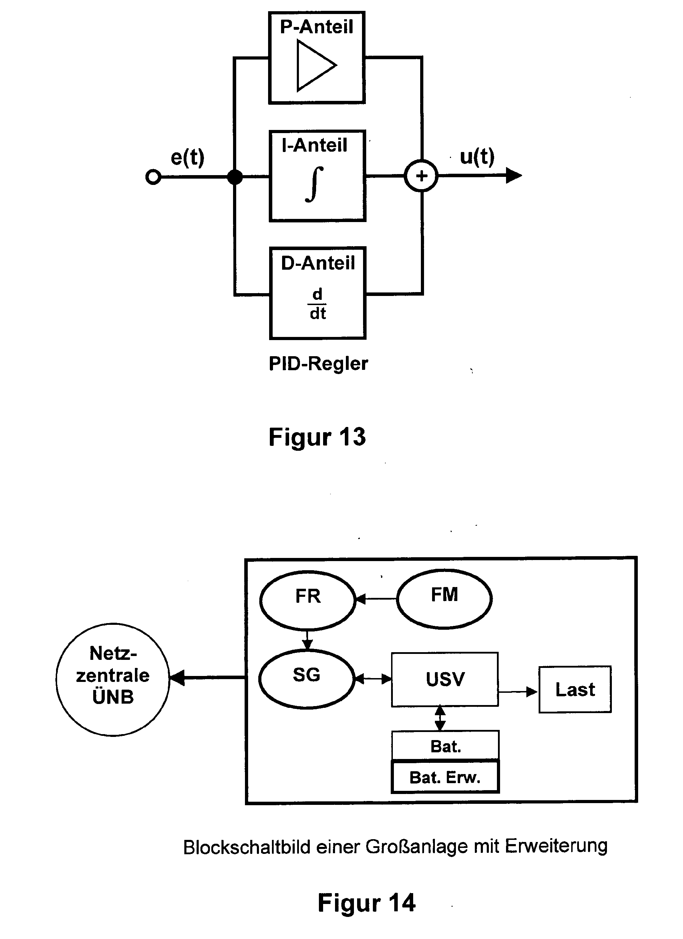

Für die schnelle Leistungsfrequenzregelung ist gemäß der Figur 13 ein Regler mit proportionalen P-Anteil (oberes Quadrat in Figur 13), integralen I-Anteil (mittleres Quadrat in Figur 13), und differentialen Anteil D-Anteil, PID-Regler (unteres Quadrat in Figur 13), erforderlich. Bei einem PID-Regler sind alle Glieder, wie in Figur 13 gezeigt, parallel miteinander verbunden. Der P-Anteil ist für das Multiplizieren des Eingangswertes mit einem vorgegebenen Wert (KP), der I-Anteil ist für die Reduzierung der Regelabweichung und der D-Anteil ist für die Verbesserung der Regelgeschwindigkeit zuständig. Die Parameter der jeweiligen Anteile sind durch eine Simulation der Regelstrecke zu ermitteln.

### Regelstrecke:

Generell gehören zu einer Regelstrecke alle Geräte und Verbindungen, die zwischen dem Regler und der Messung liegen und damit die Regelung beeinflussen. Bei der Frequenzleistungsregelung mit USV-Anlagen besteht die Regelstrecke aus dem Wechselrichter bzw. aus dem Umrichter und dem gesamten Verbundnetz. Eine Simulierung dieser Strecke ist aus diesem Grund schwierig, ist aber für die Auslegung der Parameter des Reglers notwendig.

### Kommunikationseinheit:

Die Kommunikation von den Erbringern der Regelleistung zu den entsprechenden ÜNB erfolgt über geschlossene Verbindung über das Telefonnetz. Die Datenübertragungsrate darf dabei mindestens 64 kBit/s betragen. Die Art der Informationsübergabe entscheiden die einzelnen ÜNB selbst. Für die Übertragung der Statusinformationen von der Anlage des Erbringers an die Netzzentrale nutzt E.ON Energie AG eine eigene Software. Die Kommunikation in der Erbringungseinheit ist abhängig von der Art der Anlage.

Die Bereitstellung von Regeleistung ist mit einer großen Batterieanlage nicht immer möglich. Durch die Zusammenschaltung mehrerer USV- bzw. Gleichrichtersysteme zu einem Netzwerkpool kann die benötigte Mindestgröße für Regelleistung auch mit kleineren USV-Anlagen erreicht werden. Die Mindestgröße von 100kVA pro USV-Anlage sollte dabei nicht unterschritten werden. Bei beiden Varianten ist eine Kommunikationsverbindung zu den entsprechenden ÜNB zwingend. Die Kommunikationseinheiten zu den Netzzentralen sind vom Regelleistungsanbieter zu erbringen.

### Großanlage, Figur 14:

USV-Anlagen, die mindestens eine Regelleistung ab 20 MW bereitstellen können, benötigen keine Vernetzung mit weiteren USV-Anlagen zur Durchführung der Erfindung. Die erfindungsnotwendigen Teile sind in der Figur 14 fettumrandet gekennzeichnet nämlich wiederum ein Steuergerät SG, Frequenzleistungsregler FR, Frequenzmessung FM, die untereinander verbunden sind sowie eine Batterieerweiterung Bat.Erw. der Batterieanlage der USV-Anlage, die mit dem Steuergerät kommuniziert und an der die Last hängt. An der Anlage ist für die Übertragung der Statusinformationen und der Ist-Leistung an die Netzzentrale des entsprechenden ÜNBs eine Kommunikationseinheit zu installieren, das Steuergerät SG. Für die Kommunikation innerhalb der erweiterten USV-Anlage ist wiederum das Steuergerät SG zuständig. Steuersignale vom Frequenzleistungsregler FR werden über das Steuergerät SG an den Wechselrichter, an den Umrichter oder an die Lastbank geleitet. Die Umschaltung der USV-Anlage vom USV-Betrieb in den Regelleistungsbetrieb wird ebenfalls über das Steuergerät SG ausgeführt. Die Frequenzmessung FM und der Frequenzleistungsregler FR können am gleichen Standort USV-Anlage installiert werden. Eine geringe Übertragungsstrecke ergibt eine kürzere Übertragungsdauer. Die an der USV-Anlage zu erweiternden Komponenten sind in Figur 14 fett umrandet. Die Vorhaltung der Regelleistung durch das Lastabwurf-Verfahren ist mit nur einer USV-Anlage aus regelungstechnischen Gründen nicht möglich. Regelleistung ist entsprechend der Abweichung der Frequenz zu erbringen. Mit einer einzigen USV-Anlage sind mit dem Lastabwurf-Verfahren nur zwei Stellungen zu verwirklichen.

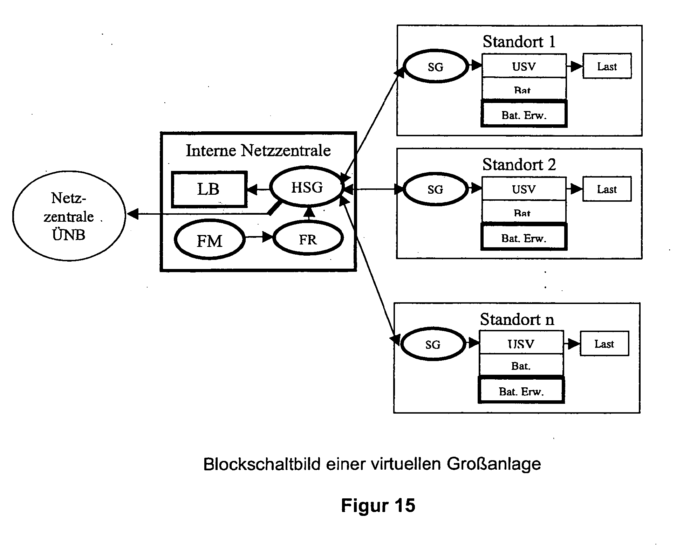

### Virtuelle Großanlage, Figur 15:

USV-Anlagen oder Gleichrichtersysteme sind sehr selten für Leistungen ab 10 MVA ausgelegt. Um auch mit Anlagen ab 100KVA die benötigte Mindestleistung von ± 10MW zu erreichen, können mehrere Anlagen zu einer virtuellen Großanlage zusammen geschalten werden, was in Figur 15 gezeigt ist. An unterschiedlichen Standorten 1, 2, ..., n befindet sich jeweils eine USV-Anlage, bezeichnet mit USV, mit nachgeschalteter Last, mit einer mit der USV in Verbindung stehenden Batterieanlage, welche jeweils um eine Batterieerweiterung, bezeichnet mit Bat.Erw., erweitert ist; ansonsten ist die virtuelle Großanlage aufgebaut wie die Großanlage der Figur 14. Die einzelnen USV-Anlagen 1, 2, ..., n werden über je ein Steuergerät SG an ein Hauptsteuergerät HSG einer internen Netzzentrale des Netzwerkpools verbunden, welche wiederum mit der Netzzentrale ÜNB verbunden ist. Somit sind sämtliche USV-Anlagen mit der internen Netzzentrale verbunden. Die Verbindung kann mit einer breitbandigen digitalen Internetverbindung über das Telefonnetz (DSL= Digital Suscriber Line) hergestellt werden. Die Frequenzmessung und damit auch die Frequenzregelung erfolgt in der internen Netzzentrale. Die Steuersignale vom Frequenzleistungsregler werden kontinuierlich an die Steuergeräte der einzelnen USV-Anlagen 1, 2, ..., n übermittelt. Die schnelle Datenübertragung und die sofortige Bereitstellung der Regelleistung ermöglicht die Einhaltung im vorgeschriebenen Zeitraum ohne eine Regelung Vorort. Eine Rückmeldung über den Status und der Ist-Leistung der USV-Anlagen erhält die interne Netzzentrale direkt von den entsprechenden Steuergeräten SG. Die Statusinformation wird von der internen Netzzentrale an die Netzzentrale der ÜNB weitergeleitet. Durch die Steuerung und Regelung in der internen Netzzentrale sind an den Standorten nur ein Steuergerät für die Kommunikation notwendig. Falls erforderlich können auch die Lastbänke an der Netzzentrale aufgestellt werden. Durch die Regelung in der Netzzentrale entfallen weitere Erweiterungen an den einzelnen Standorten. Mit dem Lastabwurfverfahren sind somit die USV-Anlagen 1, 2, ..., n nur mit einer weiteren Batterieanlage und dem Steuergerät SG zu ergänzen, wie es in Figur 10 gezeigt ist.

Die interne Netzzentrale ist das Regelungs- und Kommunikationsglied der Gesamtanlage. Sie kann sowohl durch entsprechende Geräte, durch eine Software oder eine Kombination aus Hard- und Software erstellt werden. Wie auch beim Steuergerät muss das Regelungs- und Kommunikationsglied speziell für diese Funktion entwickelt sein. Damit bei einem Defekt oder Ausfall der internen Netzzentrale nicht die gesamte Regelleistung ausfällt, ist die interne Netzzentrale parallel redundant aufzubauen.

### Optimale Auslegung von USV-Anlagen für Regelleistung:

Unter den verschiedenen Erweiterungsmöglichkeiten bietet das Lastabwurf-Verfahren die meisten Vorteile. Ohne in die Funktion der USV-Anlage einzugreifen, sind außer einer Batterieergänzung und einem Steuergerät keine weiteren Erweiterungen an den USV-Anlagen vorzunehmen. Nahezu alle USV-Anlagen können mit dieser Technik erweitert und im Netzwerk zusammengeschalten werden. Außerdem ermöglicht die Zusammenschaltung die Messung und Regelung der Regelleistung in der internen Netzzentrale. Ein weiterer Vorteil besteht darin, dass die Errichtung einer internen Netzzentrale bei virtuellen Großanlagen nur einmal notwendig ist.

### Gewerbliche Anwendbarkeit:

Für die Netzfrequenzhaltung des entsprechenden Übertragungsnetzes muss Reserveleistung, Regelleistung, bereitgestellt werden. Durch die Nutzung von Energiespeicheranlagen können Regelleistungen vorgehalten werden. Ein Vergleich über die Energiespeichertechnologien mit deren Vor- und Nachteilen sowie weitere Einsatzmöglichkeiten zeigt, dass erfindungsgemäß Batteriespeicheranlagen für die Bereiststellung von Regelleistungen am besten geeignet sind. Durch die Nutzung von bereits installierten Batterieanlagen in USV-Anlagen können mit entsprechender Technik sowohl die eigentliche Funktion erfüllt als auch die benötigten Regelleistungen erbracht werden. Damit werden mit einer USV-Anlage zwei Aufgabenbereiche gedeckt, wobei die eigentliche Funktion weiterhin erfüllt wird. Die technischen Voraussetzungen für die Vorhaltung von Regelleistung ist mit unterschiedlichen Typen von USV-Anlagen zu prüfen und diese entsprechend zu erweitern. Für die Wirtschaftlichkeitsbetrachtung ist das Verhältnis aus den kalkulierten Errichtungs- und Betriebskosten mit den Einnahmen aus der Vorhaltung von Regelleistung zu errechnen.

## Patentansprüche

1. Verfahren zur Bereitstellung von Regelleistung im Energieversorgungsbereich eines Energieversorgers zur Frequenzstabilisierung eines elektrischen Übertragungsnetzes (ÜN), in welchem sich wenigstens eine unterbrechungsfreie Stromversorgungsanlage, USV-Anlage, und/oder wenigstens ein Gleichrichtersystem zur unterbrechungsfreien Gleichstromversorgung, GR-System, sowie jeweils eine Eigenenergiequelle, wie Batterieanlage, der USV-Anlage und/oder des GR-Systems zur Notversorgung bei Ausfall des Übertragungsnetzes wenigstens einer an die USV-Anlage oder an das GR-System angeschlossenen elektrischen Last (Verbraucher) befindet, welche Drehstrom- und/oder Wechselstrom- und/oder Gleichstromverbraucher sein können, eines die USV-Anlage und/oder das GR-System betreibenden Netzverbrauchers, der an das elektrische Übertragungsnetz angeschlossen ist, **dadurch gekennzeichnet, dass** die unterbrechungsfreie Stromversorgungsanlage (USV-Anlage) und/oder das Gleichrichtersystem (GR-System) mit einem Steuergerät (SG) verbunden ist, und entweder bei der Nachfrage von positiver Regelleistung im Übertragungsnetz (ÜN) die oder mehrere der unterbrechungsfreien Stromversorgungsanlagen und/ oder das oder mehrere der Gleichrichtersysteme durch das jeweilige Steuergerät (SG) vom Übertragungsnetz (ÜN) getrennt werden, und die Eigenenergiequelle der USV-Anlage und/oder des GR-Systems Eigenenergie als Regelleistung in das Übertragungsnetz (ÜN) einspeist, wobei die Last nur über die unterbrechungsfreie Stromversorgung der USV-Anlage und/oder des GR-Systems aus deren Eigenenergiequelle weiter versorgt wird, oder bei der Nachfrage von negativer Regelleistung mittels des Steuergerätes eine oder mehrere variable Lasten, Lastbänke, zugeschaltet werden (Lastabwurf-Verfahren), so dass ein höherer Energieverbrauch als vor dem Lastabwurf im Übertragungsnetz (ÜN) stattfindet.

2. Verfahren nach Anspruch 1, **dadurch gekennzeichnet,**
**dass** das Übertragungsnetz (ÜN) des Energieversorgers eine Netzzentrale (NZ-ÜNB) aufweist, welche mit dem jeweiligen Steuergerät der USV-Anlage und/oder des GR-Systems verbunden ist, wobei die USV-Anlage und/oder das GR-System über die Netzzentrale (NZ-ÜNB) aktiviert und deaktiviert werden kann, und bei Nachfrage von Regelleistung die Netzzentrale das Steuergerät (SG) aktiviert, welches bei Nachfrage von positiver Regelleistung entweder die Trennung der USV-Anlage und/oder des GR-Systems vom Übertragungsnetz (ÜN) aktiviert oder bei Nachfrage von negativer Regelleistung die variable Last zuschaltet.

3. Verfahren nach Anspruch 1 oder 2 unter Verwendung von zwei parallel geschalteten USV-Anlagen mit einem Lastumschaltmodul, der mit der Last verbunden ist, **dadurch gekennzeichnet, dass** eine der beiden USV-Anlagen ständig über das Lastumschaltmodul zur Versorgung der Last dient und nur die andere der beiden USV-Anlagen zur Lieferung von Regelleistung herangezogen wird, indem diese USV-Anlage vom Übertragungsnetz abgeschaltet und die Eigenenergie der Eigenenergiequelle der USV-Anlage über einen Gleichstrom/Wechselstrom-Umrichter als Regelenergie dem Übertragungsnetz eingespeist wird.

4. Verfahren nach Anspruch 1, **dadurch gekennzeichnet,**
**dass** das jeweilige, mit der USV-Anlage und/oder dem GR-System verbundene Steuergerät selbsttätig die Frequenz des Netzes überwacht und bei vorgegebener positiver oder negativer Abweichung automatisch die USV-Anlage und/oder das GR-System aktiviert.

5. Verfahren nach einem der vorherigen Ansprüche, **dadurch gekennzeichnet,**
**dass** ein Steuergerät (SG) für eine Mehrzahl von USV-Anlagen und/oder GR-Systeme vorhanden und mit diesen verbunden ist und bei Nachfrage von Regelleistung aufgrund Frequenzabweichung entweder die Netzzentrale das Steuergerät aktiviert oder das Steuergerät automatisch aktiv wird, welches bei Nachfrage von positiver Regelleistung entweder die Trennung der USV-Anlagen und/oder der GR-Systeme vom Übertragungsnetz (ÜN) aktiviert oder bei Nachfrage von negativer Regelleistung variable Lasten zuschaltet.

6. Vorrichtung zur Bereitstellung von Regelleistung im Energieversorgungsbereich eines Energieversorgers zur Frequenzstabilisierung eines elektrischen Übertragungsnetzes (ÜN), in welchem sich wenigstens eine unterbrechungsfreie Stromversorgungsanlage, USV-Anlage, und/oder wenigstens ein Gleichrichtersystem zur unterbrechungsfreien Gleichstromversorgung, GR-System, sowie jeweils eine Eigenenergiequelle, wie Batterieanlage, der USV-Anlage und/oder des GR-System zur Notversorgung wenigstens einer an die USV-Anlage oder an das GR-System angeschlossenen elektrischen Last (Verbraucher) befindet, welche Drehstrom- und/oder Wechselstrom- und/oder Gleichstromverbraucher sein können, eines die USV-Anlage und/oder das GR-System betreibenden Netzverbrauchers, der an das elektrische Übertragungsnetz angeschlossen ist,
**dadurch gekennzeichnet,**
**dass** die USV-Anlage und/oder das GR-System mit einem Steuergerät (SG) verbunden ist, wobei vor der USV-Anlage und/oder dem GR-System ein Schalter (S1, S2), Netztrennschalter, angeordnet ist, auf den das Steuergerät (SG) einzuwirken imstande ist und der mit der USV-Anlage und/oder dem GR-System zu deren Ausschaltung oder Einschaltung verbunden ist, und entweder bei Nachfrage von positiver Regelleistung im Übertragungsnetz (ÜN) das Steuergerät (SG) den Schalter (S1, S2) öffnet und die oder mehrere USV-Anlagen und/oder das oder mehrere GR-Systeme vom Netz trennt, und die Eigenenergiequelle der USV-Anlage und/oder des GR-Systems Eigenenergie als Regelleistung in das Übertragungsnetz (ÜN) einspeist, wobei die Last über die unterbrechungsfreie Stromversorgung der USV-Anlage und/oder des GR-Systems aus deren Eigenenergiequelle weiter versorgt wird, oder bei der Nachfrage von negativer Regelleistung mittels des Steuergerätes eine oder mehrere variable Lasten zugeschaltet werden (Lastabwurf-Verfahren) so dass ein höherer Energieverbrauch als vor dem Lastabwurf im Übertragungsnetz (ÜN) stattfindet.

7. Vorrichtung nach Anspruch 6, **dadurch gekennzeichnet, dass** das Übertragungsnetz (ÜN) des Energieversorgers eine Netzzentrale (NZ-ÜNB) aufweist, welche mit dem jeweiligen Steuergerät der USV-Anlage und/oder des GR-Systems verbunden ist, wobei die USV-Anlage und/oder das GR-System über die Netzzentrale (NZ-ÜNB) aktivierbar und deaktivierbar ist, und bei Nachfrage von Regelleistung die Netzzentrale das Steuergerät (SG) aktiviert, welches entweder die Trennung der USV-Anlage und/oder des GR-Systems vom Übertragungsnetz (ÜN) zu aktivieren oder die variable Last zuzuschalten imstande ist.

8. Vorrichtung nach einem der vorherigen Ansprüche 6 und/oder 7,
**dadurch gekennzeichnet**, zwei parallel geschaltete USV-Anlagen mit einem Lastumschaltmodul vorhanden sind, der mit der Last verbunden ist, wobei eine der beiden USV-Anlagen ständig über das Lastumschaltmodul zur Versorgung der Last dient und nur die andere der beiden USV-Anlagen Regelleistung zu liefern imstande ist, indem diese USV-Anlage vom Übertragungsnetz abgeschaltet und die Eigenenergie der Eigenenergiequelle der USV-Anlage über einen Gleichstrom/Wechselstrom-Umrichter in das Übertragungsnetz eingespeist wird.

9. Vorrichtung nach Anspruch 6, **dadurch gekennzeichnet, dass** das jeweilige, mit der USV-Anlage und/oder dem GR-System verbundene Steuergerät selbsttätig die Frequenz des Netzes zu überwachen und bei vorgegebener positiver oder negativer Abweichung automatisch die USV-Anlage und/oder das GR-System zu aktivieren imstande ist.

10. Vorrichtung nach einem der Ansprüche 6 bis 9, **dadurch gekennzeichnet, dass** vor derjenigen USV-Anlage zur Lieferung von Regelleistung ein Netztrennschalter (S1) sich befindet, der über das Steuergerät (SG) angesteuert wird,
wobei dieser USV-Anlage ein zweiter Schalter (S2) nachgeschaltet ist, der ebenfalls über das Steuergerät (SG) angesteuert wird, wobei dem zweiten Schalter ein Gleichstrom/Wechselstrom-Umrichter nachgeschaltet ist, welcher an das Übertragungsnetz angeschlossen ist zur Einspeisung der Regelenergie.

11. Vorrichtung nach einem der vorherigen Ansprüche, **dadurch gekennzeichnet,**
**dass** die Batterieanlage der USV-Anlage/n und oder des/r Gleichrichtersysteme für die Lieferung von Regelleistung um eine vorgegebene Anzahl von weiteren Batterien erweitert ist.

12. Vorrichtung nach einem der Ansprüche 6 bis 11, beim Einsatz wenigstens eines Gleichrichtersystems für die Lieferung von Regelleistung, mit einer dem Gleichrichter (AC/DC) nachgeschalteter Last, **dadurch gekennzeichnet, dass** zur Rückspeisung von Regelleistung in das Übertragungsnetz dem Gleichrichter (AC/DC) ein Wechselrichter (DC/AC) parallel geschaltet ist und entweder zwischen dem Gleichrichter (AC/DC) und dessen Batterieanlage ein Schalter (S1) angeordnet ist, dessen einer der Kontaktwege die Batterie mit der DC-Last und dessen anderer der Kontaktwege die Batterie mit dem Wechselrichter verbindet, oder sowohl dem Gleichrichter (AC/DC) als auch dem Wechselrichter (DC/AC) ein Schalter (S1) vorgelagert ist, an dessen Eingang das Übertragungsnetz angeschlossen ist und dessen einer der Kontaktwege mit dem Gleichrichter (AC/DC) und dessen anderer der Kontaktwege mit dem Wechselrichter (DC/AC) verbunden ist
wobei das Steuergerät sowohl auf den Schalter als auch auf den Wechselrichter einzuwirken imstande ist.

13. Vorrichtung nach einem der Ansprüche 6 bis 12, **dadurch gekennzeichnet,**
**dass** für die Erzeugung von Regelleistung zur Einspeisung in das Netz, unter Verwendung von wenigstens einer USV-Anlage (USV) und/oder eines Gleichrichtersystems (GRS), an welche eine Last angeschlossen ist, eine variable Last, wie Lastbank, vorhanden ist, welche direkt mit dem Übertragungsnetz in Verbindung steht, wobei der USV-Anlage (USV) und/oder dem Gleichrichtersystems (GRS) ein Netztrennschalter (S1) vorgeschaltet ist, und dass das Steuergerät sowohl auf den Netztrennschalter (S1) als auch auf die variable Last einzuwirken imstande ist zur Trennung der USV-Anlage (USV) und/oder des Gleichrichtersystems (GRS) vom Übertragungsnetz und Zuschalten der variablen Last.

14. Vorrichtung nach Anspruch 6, **dadurch gekennzeichnet,**
**dass** ein Steuergerät (SG) für eine Mehrzahl von USV-Anlagen und/oder GR-Systeme vorhanden und mit diesen verbunden ist und bei Nachfrage von Regelleistung aufgrund Frequenzabweichung entweder die Netzzentrale das Steuergerät zu aktivieren oder das Steuergerät sich automatisch zu aktivieren imstande ist, welches bei Nachfrage von positiver Regelleistung entweder die Trennung der USV-Anlagen und/oder der GR-Systeme vom Übertragungsnetz (ÜN) aktiviert oder bei Nachfrage von negativer Regelleistung variable Lasten zuschaltet.
